# EUROPEAN PATENT SPECIFICATION

(11) **EP 4 049 827 B1**
(45) Date of publication and mention of the grant of the patent: **09.08.2023**
(21) Application number: 22158042.6
(22) Date of filing: 22.02.2022
(51) Int. Cl.: B29C 45/78, B29C 45/74, B29C 45/76

(54) **INJECTION MOLDING MACHINE**
SPRITZGIESSMASCHINE
MACHINE DE MOULAGE À INJECTION

(30) Priority: 26.02.2021 JP 2021030084
(43) Date of publication of application: 31.08.2022
(73) Proprietor: SUMITOMO HEAVY INDUSTRIES, LTD., Tokyo 141-6025 (JP)
(72) Inventor: HIRANO, Tomohiro, Chiba, 263-0001 (JP); KURAHASHI, Seigo, Chiba, 263-0001 (JP); SUZUKI, Keisuke, Chiba, 263-0001 (JP)
(74) Representative: Louis Pöhlau Lohrentz

(56) References cited:
- EP-A1- 3 546 171
- JP-A- H05 177 688

## Description

### BACKGROUND OF THE INVENTION

### Field of the Invention

The present invention relates to an injection molding machine.

### Description of Related Art

In the related art, in an injection molding machine, a technique for starting work on a predetermined time has been proposed. For example, Japanese Unexamined Patent Publication No. H07-176083 has proposed a technique as follows. In setting a temperature of a cylinder of the injection molding machine, an operation is first set, and thereafter, a resin purge temperature is consecutively set through cylinder heat retention. In this manner, an unmanned operation is achieved, and a setup time is shortened to improve production efficiency.

Specifically, an operation start date and an operation start time are set to set for temperature retention of the cylinder. Then, after a temperature of the cylinder reaches a heat retention temperature, temperature gradient setting is performed up to the resin purge temperature. In this manner, the temperature of the cylinder can reach the resin purge temperature.

As another example, Japanese Unexamined Patent Publication No. H07-024892 has proposed a technique for controlling a power supply to be turned on and off, based on a calendar timer. Specifically, the injection molding machine is always operated by a secondary power supply configured to include a solar panel and a storage battery. When a set time comes, a relay coil is turned on to supply power from a commercial power supply. Therefore, temperature raising control of a plasticizing cylinder starts. In this manner, molding work can start at a work start time.

As another example, Japanese Unexamined Patent Publication No. H05-177688 discloses an automatic start-up device for automatically starting an injection molding machine.

### SUMMARY OF THE INVENTION

In the techniques disclosed in Japanese Unexamined Patent Publication No. H07-176083 and Japanese Unexamined Patent Publication No. H07-024892, when the cylinder is heated to a target temperature corresponding to a molding material and thereafter, a state of the target temperature is continuously maintained, a retention time of the molding material is lengthened. As a result, there is a possibility that a molding defect such as discoloration may occur.

For example, in the injection molding machine, it is necessary to raise the temperature for not only the cylinder but also a mold unit. In some cases, a temperature raising speed of the mold unit may be slower than that of the cylinder. In this case, after the temperature of the molding material inside the cylinder reaches the target temperature, a time for the mold unit to reach the target temperature is slow. Consequently, there is a possibility that a molding defect such as discoloration may occur due to retention of the molding material inside the cylinder.

As another example, in some cases, the injection molding machine may use a plurality of types of molding materials. In this case, a different molding material is supplied for each cylinder of an injection unit. The target temperature for the temperature raising varies for each molding material. Accordingly, when temperature raising starts for a plurality of cylinders at the same time, even when the raised temperature reaches the target temperature corresponding to the molding material supplied to one of the cylinders, in some situations, the raised temperature does not reach the target temperature corresponding to the molding material supplied to the other of the cylinders. In this situation, when the temperature of the other molding material reaches the target temperature, one molding material is continuously retained. Consequently, there is a possibility that a molding defect such as discoloration may occur due to retention of the molding material.

One aspect of the present invention is to provide a technique for suppressing a molding defect caused by a lengthened retention time of a molding material inside a cylinder during heating.

According to an aspect of the present invention, there is provided an injection molding machine including a plasticizing cylinder and a control unit. The plasticizing cylinder is connected to a cavity space formed in a mold unit, and melts a molding material to mold a molding product in the cavity space. The control unit controls temperature raising of the plasticizing cylinder, based on a temperature of the mold unit and a set time.

According to an aspect of the present invention, a retention time of the molding material supplied to the plasticizing cylinder can be reduced. Therefore, a molding defect such as discoloration of the molding material inside the plasticizing cylinder can be suppressed.

### BRIEF DESCRIPTION OF THE DRAWINGS

FIG. 1 is a view illustrating a state when mold opening is completed in an injection molding machine according to an embodiment.
FIG. 2 is a view illustrating a state when mold clamping is performed in the injection molding machine according to the embodiment.
FIG. 3 is a view when a movable platen, a rotary table, and a movable die according to the embodiment are viewed from a front side.
FIG. 4 is a sectional view taken along line IV-IV in FIG. 3, and is a sectional view illustrating an example of a state of the injection molding machine when the mold clamping is performed.
FIG. 5 is a sectional view illustrating an example of a state of the injection molding machine when the mold opening is performed, subsequently to FIG. 4.
FIG. 6 is a sectional view illustrating an example of a state of the injection molding machine when the mold clamping is performed, subsequently to FIG. 5.
FIG. 7 is a sectional view taken along line VII-VII in FIG. 6 and is a sectional view illustrating an example of a state of the injection molding machine when the mold clamping illustrated in FIG. 6 is performed.
FIG. 8 is a sectional view illustrating an example of a state of the injection molding machine when the mold opening is performed.
FIG. 9 is a sectional view illustrating an example of a state of the injection molding machine when a second ejector rod abuts on a second ejector plate, before a first ejector rod abuts on a first ejector plate.
FIG. 10 is a sectional view illustrating an example of a state of the injection molding machine when the first ejector rod abuts on the first ejector plate and simultaneously, the second ejector rod abuts on the second ejector plate.
FIG. 11 is a sectional view illustrating an example of a state of the injection molding machine when the first ejector rod and the second ejector rod are located at ejection positions.
FIG. 12 is a functional block diagram illustrating components of a control device according to the embodiment.
FIG. 13 is a view illustrating a first example of calendar timer setting information.
FIG. 14 is a flowchart illustrating an overall flow of temperature raising control of a cylinder in the injection molding machine according to the embodiment.
FIG. 15 is a flowchart of the temperature raising control based on a set time in a cylinder temperature control unit of the injection molding machine according to the embodiment.
FIG. 16 is a flowchart of temperature raising control based on a measured temperature of a mold unit in the cylinder temperature control unit of the injection molding machine according to the embodiment.
FIG. 17 is a view illustrating a second example of the calendar timer setting information.
FIG. 18 is a view illustrating a third example of the calendar timer setting information.
FIG. 19 is a view illustrating a fourth example of the calendar timer setting information.
FIG. 20 is a view illustrating a fifth example of the calendar timer setting information.

### DETAILED DESCRIPTION OF THE INVENTION

Hereinafter, embodiments of the present invention will be described with reference to the drawings. In each drawing, the same or corresponding reference numerals will be assigned to the same or corresponding configurations, and description thereof will be omitted.

### (Injection Molding Machine)

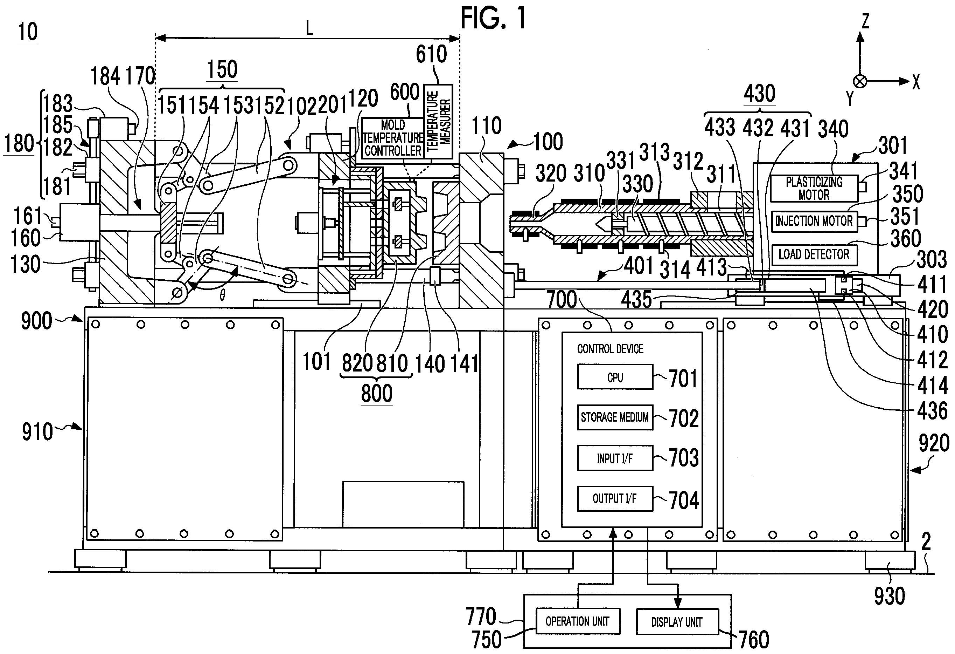

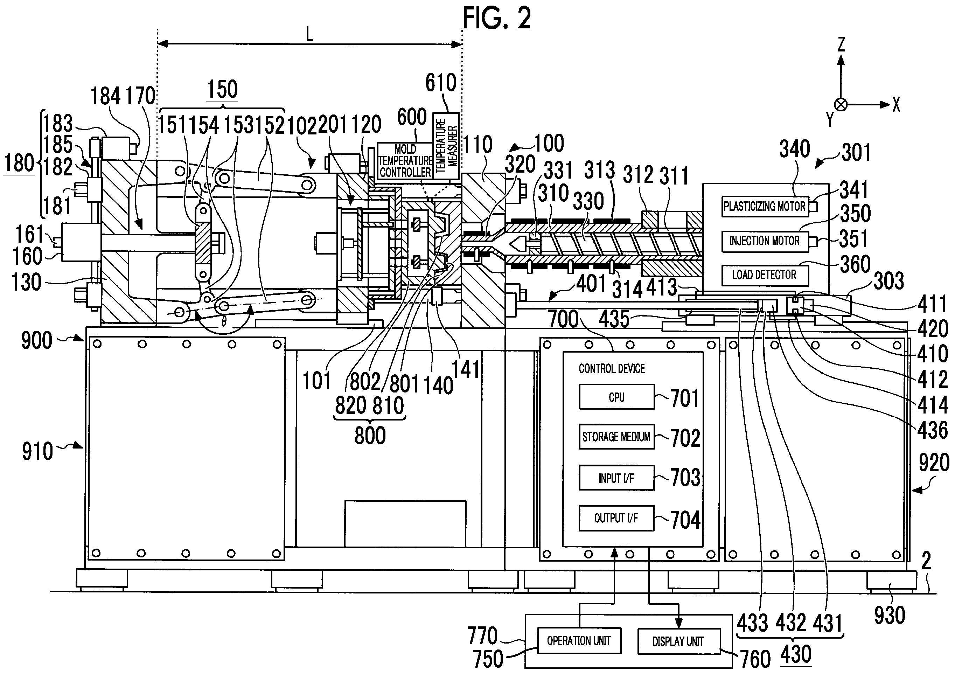

FIG. 1 is a view illustrating a state when mold opening is completed in an injection molding machine according to an embodiment. FIG. 2 is a view illustrating a state when mold clamping is performed in the injection molding machine according to the embodiment. In FIGS. 1 and 2, an X-axial direction, a Y-axial direction, and a Z-axial direction are perpendicular to each other. The X-axial direction and the Y-axial direction represent a horizontal direction, and the Z-axial direction represents a vertical direction. When a mold clamping unit 100 is a horizontal type, the X-axial direction represents a mold opening and closing direction, and the Y-axial direction represents a width direction of the injection molding machine 10. A negative side in the Y-axial direction is an operation side, and a positive side in the Y-axial direction is a counter operation side.

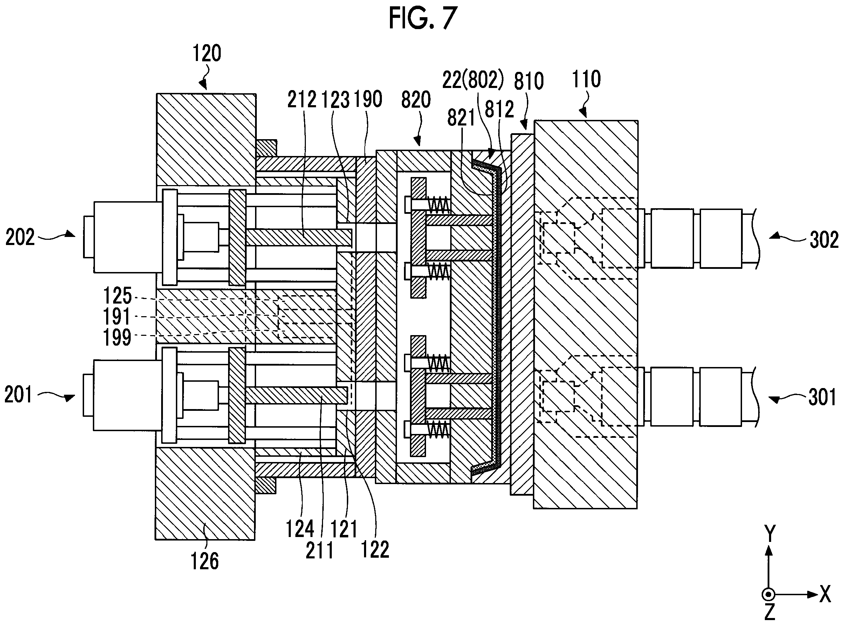

As illustrated in FIGS. 1 and 2, the injection molding machine 10 includes a mold clamping unit 100 that opens and closes a mold unit 800, a first ejector unit 201 that ejects a second molding product 22 molded by the mold unit 800, a second ejector unit 202 (refer to FIG. 7) that ejects the second molding product 22 molded by the mold unit 800, a first injection unit 301 that injects a molding material into the mold unit 800, a second injection unit 302 (refer to FIG. 7) that injects the molding material into the mold unit 800, a first moving unit 401 that advances and retreats the first injection unit 301 with respect to the mold unit 800, a second moving unit (not illustrated) that advances and retreats the second injection unit 302 with respect to the mold unit 800, a control device 700 that controls each component of the injection molding machine 10, and a frame 900 that supports each component of the injection molding machine 10. The frame 900 includes a mold clamping unit frame 910 that supports the mold clamping unit 100, and an injection unit frame 920 that supports the first injection unit 301 and the second injection unit 302. The mold clamping unit frame 910 and the injection unit frame 920 are respectively installed on a floor 2 via a leveling adjuster 930. The control device 700 is disposed in an internal space of the injection unit frame 920. Hereinafter, each component of the injection molding machine 10 will be described.

### (Mold Clamping Unit)

In describing the mold clamping unit 100, a moving direction of a movable platen 120 during mold closing (for example, a positive direction of an X-axis) will be defined as forward, and a moving direction of the movable platen 120 during mold opening (for example, a negative direction of the X-axis) will be defined as rearward.

The mold clamping unit 100 performs mold closing, pressurizing, mold clamping, depressurizing, and mold opening of the mold unit 800. The mold unit 800 includes a stationary die 810 and a movable die 820.

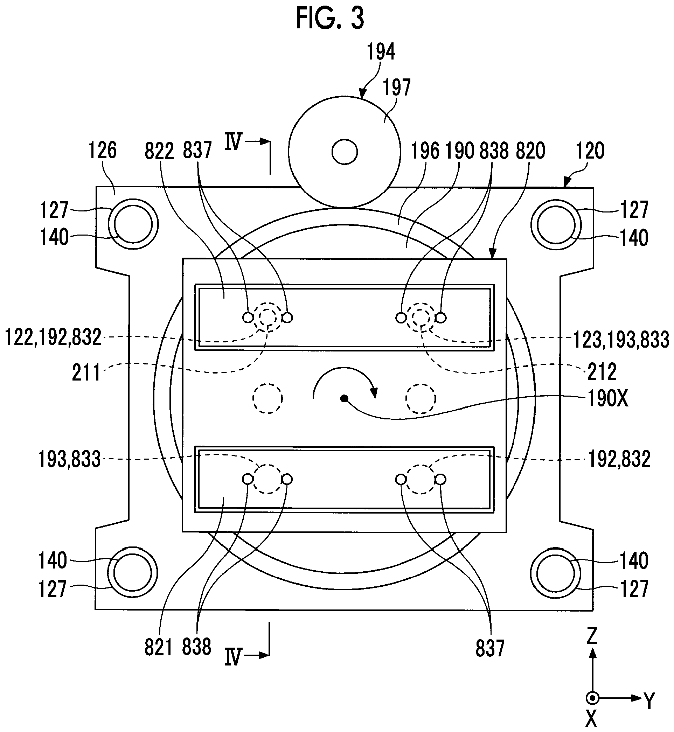

For example, the mold clamping unit 100 is a horizontal type, and the mold opening and closing direction is a horizontal direction. The mold clamping unit 100 includes a stationary platen 110, a movable platen 120, a rotary table 190 (refer to FIG. 3), a rotation mechanism 194 (refer to FIG. 3), a moving mechanism 102, a mold temperature controller 600, and a temperature measurer 610.

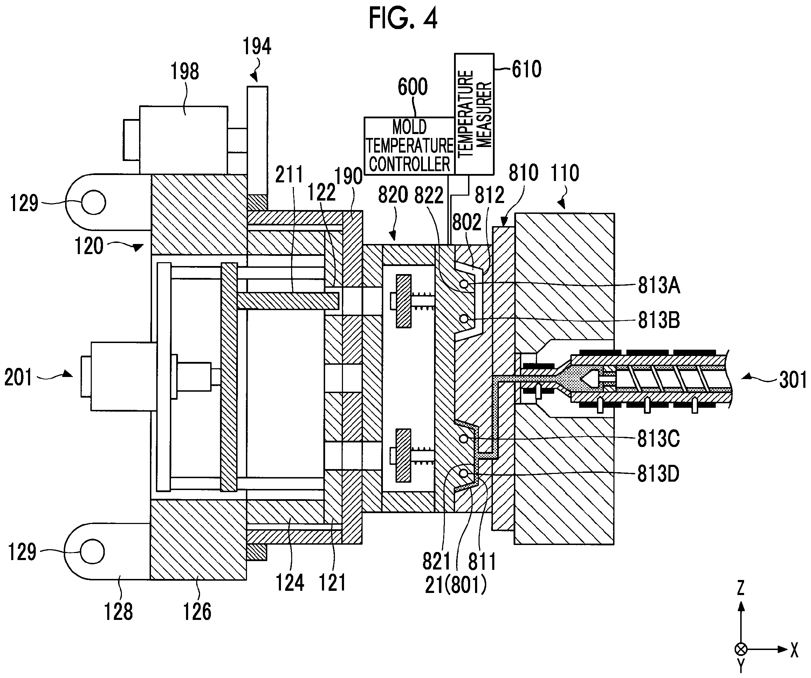

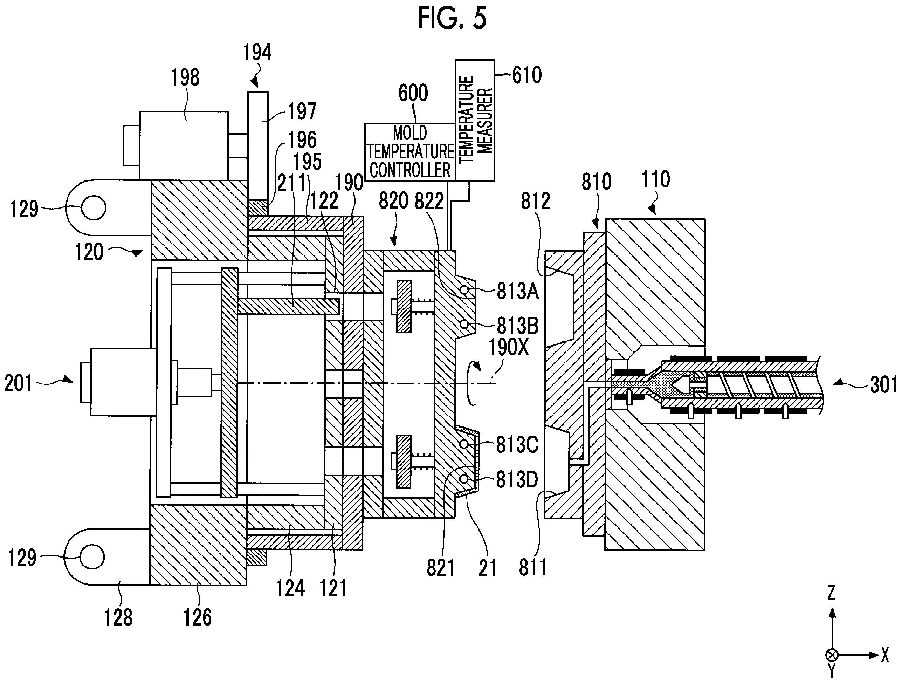

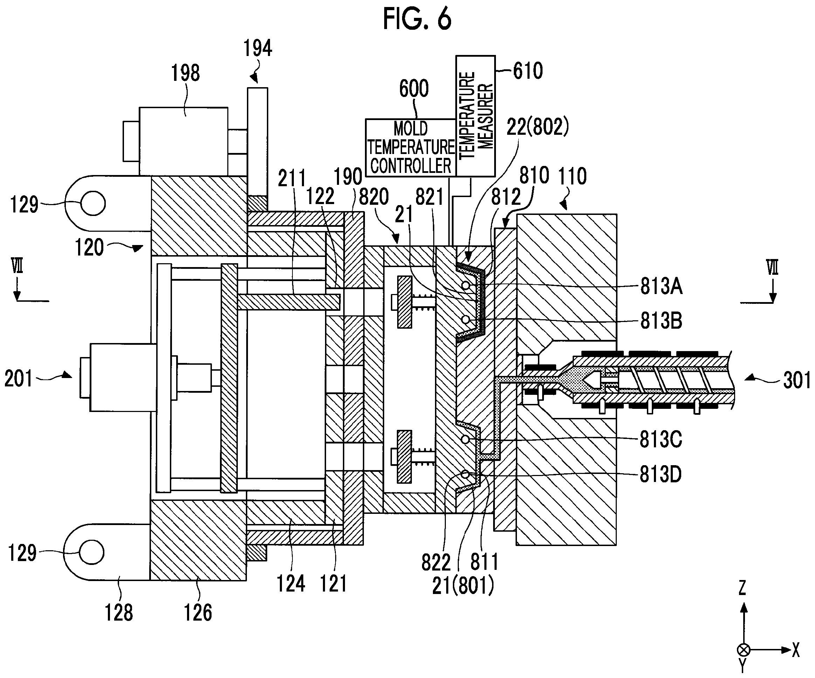

FIG. 3 is a view when the movable platen, the rotary table, and the movable die 820 according to the embodiment are viewed from a front side. FIG. 4 is a sectional view taken along line IV-IV in FIG. 3, and is a sectional view illustrating an example of a state of the injection molding machine when mold clamping is performed. FIG. 5 is a sectional view illustrating an example of a state of the injection molding machine when the mold opening is performed, subsequently to FIG. 4. FIG. 6 is a sectional view illustrating an example of a state of the injection molding machine when the mold clamping is performed, subsequently to FIG. 5. FIG. 7 is a sectional view taken along line VII-VII in FIG. 6 and is a sectional view illustrating an example of a state of the injection molding machine when the mold clamping illustrated in FIG. 6 is performed. The X-axial direction, the Y-axial direction, and the Z-axial direction in FIGS. 3 to 7 are directions the same as the X-axial direction, the Y-axial direction, and the Z-axial direction in FIGS. 1 to 2.

The stationary platen 110 is fixed to the mold clamping unit frame 910. The stationary die 810 is attached to a facing surface of the stationary platen 110 which faces the movable platen 120. The stationary die 810 includes a first stationary molding surface 811 and a second stationary molding surface 812 on a surface facing the movable die 820.

The first stationary molding surface 811 forms a portion of a wall surface of a first cavity space 801 in which the first molding product 21 is molded. On the other hand, the second stationary molding surface 812 forms a portion of a wall surface of a second cavity space 802 in which the second molding product 22 is molded.

The first stationary molding surface 811 and the second stationary molding surface 812 are formed in different shapes, and each is formed in a recessed shape, for example. The first stationary molding surface 811 and the second stationary molding surface 812 are formed in the same die plate, but may be formed in different die plates.

The movable platen 120 is disposed to be movable in the mold opening and closing direction with respect to the mold clamping unit frame 910. A guide 101 that guides the movable platen 120 is laid on the mold clamping unit frame 910. The movable die 820 is attached to a surface facing the stationary platen 110 in the movable platen 120 via the rotary table 190. As illustrated by a broken line in FIG. 7, the movable platen 120 supports a rotary shaft 191 of the rotary table 190 to be rotatable via a bearing 199.

The movable die 820 has a first movable molding surface 821 and a second movable molding surface 822 on a surface facing the stationary die 810. The first movable molding surface 821 and the second movable molding surface 822 respectively and sequentially form a portion of the wall surface of the first cavity space 801 and a portion of the wall surface of the second cavity space 802 (refer to FIGS. 4 and 6).

The first movable molding surface 821 and the second movable molding surface 822 are respectively formed in the same shape, and are formed in a protruded shape, for example. The first movable molding surface 821 and the second movable molding surface 822 are formed in the same die plate, but may be formed in different die plates.

In the present embodiment, the first stationary molding surface 811 and the second stationary molding surface 812 are formed in the recessed shape, and the first movable molding surface 821 and the second movable molding surface 822 are formed in the protruded shape. However, the present invention is not limited thereto. That is, the first stationary molding surface 811 and the second stationary molding surface 812 may be formed in the protruded shape, and the first movable molding surface 821 and the second movable molding surface 822 may be formed in the recessed shape.

The rotation mechanism 194 rotates the rotary table 190. The rotation mechanism 194 includes a cylindrical rotation cylinder 195 extending rearward from an outer peripheral portion of the rotary table 190, a driven gear 196 formed on an entire outer peripheral surface of the rotation cylinder 195 in a circumferential direction, and a driving gear 197 that meshes with the driven gear 196, and a rotation motor 198 that rotates the driving gear 197. A rotational driving force of the rotation motor 198 is transmitted to the rotary table 190 via the driving gear 197, the driven gear 196, and the rotation cylinder 195.

The rotation motor 198 is disposed above the movable platen 120 (positive side in the Z-axial direction), but may be disposed below the movable platen 120 (negative side in the Z-axial direction), or may be disposed on a side of the movable platen 120 (positive side in the Y-axial direction or negative side in the Y-axial direction). In addition, a timing belt may be used as means for transmitting the rotational driving force of the rotation motor 198 to the rotary table 190.

The rotation mechanism 194 rotates the rotary table 190 by 180° when the mold opening is performed. In this manner, the first movable molding surface 821 turns between a position (refer to FIG. 4) forming a portion of the wall surface of the first cavity space 801 and a position (refer to FIG. 6) forming a portion of the wall surface of the second cavity space 802. Similarly, the rotation mechanism 194 rotates the rotary table 190 by 180° when the mold opening is performed. In this manner, the second movable molding surface 822 turns between a position (refer to FIG. 6) forming a portion of the wall surface of the first cavity space 801 and a position (refer to FIG. 4) forming a portion of the wall surface of the second cavity space 802.

When the mold clamping illustrated in FIG. 4 is performed, the first movable molding surface 821 and the first stationary molding surface 811 form the first cavity space 801, and the second movable molding surface 822 and the second stationary molding surface 812 form the second cavity space 802. In addition, when the mold clamping illustrated in FIG. 6 is performed, the second movable molding surface 822 and the first stationary molding surface 811 form the first cavity space 801, and the first movable molding surface 821 and the second stationary molding surface 812 form the second cavity space 802.

The rotation mechanism 194 may reverse a rotation direction of the rotary table 190 each time the rotary table 190 rotates by 180°. For example, the rotation mechanism 194 rotates the rotary table 190 by 180° in a clockwise direction, and thereafter, rotates the rotary table 190 by 180° in a counterclockwise direction. Disposition of a wiring and a pipe which are fixed to the rotary table 190 returns to an original disposition. Therefore, the wiring and the pipe can be easily handled.

The moving mechanism 102 (refer to FIGS. 1 and 2) performs mold closing, pressurizing, mold clamping, depressurizing, and mold opening of the mold unit 800 by relatively moving the stationary platen 110 and the movable platen 120 close to or away from each other. When the mold opening is performed, the rotation mechanism 194 rotates the rotary table 190 by 180°. The moving mechanism 102 has a toggle support 130 disposed at an interval from the stationary platen 110, a tie bar 140 that connects the stationary platen 110 and the toggle support 130 to each other, a toggle mechanism 150 that moves the movable platen 120 in the mold opening and closing direction with respect to the toggle support 130, a mold clamping motor 160 that operates the toggle mechanism 150, a motion conversion mechanism 170 that converts a rotary motion into a linear motion of the mold clamping motor 160, and a mold space adjustment mechanism 180 that adjusts an interval L between the stationary platen 110 and the toggle support 130.

The toggle support 130 is disposed at an interval from the stationary platen 110, and is mounted on the mold clamping unit frame 910 to be movable in the mold opening and closing direction. The toggle support 130 may be disposed to be movable along a guide laid on the mold clamping unit frame 910. The guide of the toggle support 130 may be common to the guide 101 of the movable platen 120.

In the present embodiment, the stationary platen 110 is fixed to the mold clamping unit frame 910, and the toggle support 130 is disposed to be movable in the mold opening and closing direction with respect to the mold clamping unit frame 910. However, the toggle support 130 may be fixed to the mold clamping unit frame 910, and the stationary platen 110 may be disposed to be movable in the mold opening and closing direction with respect to the mold clamping unit frame 910.

The tie bar 140 connects the stationary platen 110 and the toggle support 130 to each other at an interval L in the mold opening and closing direction. A plurality of (for example, four) tie bars 140 may be used. The plurality of tie bars 140 are disposed parallel to each other in the mold opening and closing direction, and extend in accordance with a mold clamping force. At least one of the tie bars 140 may be provided with a tie bar strain detector 141 that detects a strain of the tie bar 140. The tie bar strain detector 141 transmits a signal indicating a detection result thereof to the control device 700. The detection result of the tie bar strain detector 141 is used in detecting the mold clamping force.

In the present embodiment, as a mold clamping force detector for detecting the mold clamping force, the tie bar strain detector 141 is used. However, the present invention is not limited thereto. The mold clamping force detector is not limited to a strain gauge type. The mold clamping force detector may be a piezoelectric type, a capacitive type, a hydraulic type, or an electromagnetic type, and an attachment position thereof is not limited to the tie bar 140.

The toggle mechanism 150 is disposed between the movable platen 120 and the toggle support 130, and moves the movable platen 120 in the mold opening and closing direction with respect to the toggle support 130. The toggle mechanism 150 has a crosshead 151 that moves in the mold opening and closing direction, and a pair of link groups bent and stretched by a movement of the crosshead 151. Each of the pair of link groups has a first link 152 and a second link 153 which are connected to be freely bent and stretched by a pin. The first link 152 is oscillatingly attached to the movable platen 120 by a pin. The second link 153 is oscillatingly attached to the toggle support 130 by a pin. The second link 153 is attached to the crosshead 151 via a third link 154. When the crosshead 151 is advanced and retreated with respect to the toggle support 130, the first link 152 and the second link 153 are bent and stretched, and the movable platen 120 is advanced and retreated with respect to the toggle support 130.

A configuration of the toggle mechanism 150 is not limited to configurations illustrated in FIGS. 1 and 2. For example, in FIGS. 1 and 2, the number of nodes in each link group is five, but may be four. One end portion of the third link 154 may be connected to the node between the first link 152 and the second link 153.

The mold clamping motor 160 is attached to the toggle support 130, and operates the toggle mechanism 150. The mold clamping motor 160 advances and retreats the crosshead 151 with respect to the toggle support 130. In this manner, the first link 152 and second link 153 are bent and stretched so that the movable platen 120 is advanced and retreated with respect to the toggle support 130. The mold clamping motor 160 is directly connected to the motion conversion mechanism 170, but may be connected to the motion conversion mechanism 170 via a belt or a pulley.

The motion conversion mechanism 170 converts a rotary motion of the mold clamping motor 160 into a linear motion of the crosshead 151. The motion conversion mechanism 170 includes a screw shaft and a screw nut screwed to the screw shaft. A ball or a roller may be interposed between the screw shaft and the screw nut.

The mold clamping unit 100 performs a mold closing process, a pressurizing process, a mold clamping process, a depressurizing process, a mold opening process, and a mold rotating process under the control of the control device 700. The mold rotating process is performed after the completion of the mold opening process and before the start of the next mold closing process. In the present embodiment, the mold rotating process is performed after an ejection process is completed, but may be performed before the ejection process is completed. For example, when a position where a secondary molding product is molded and a position where the secondary molding product is ejected are different from each other, the mold rotating process is performed after the mold opening process is completed, and thereafter, the ejection process is performed. Specifically, for example, when the position where the secondary molding product is molded is located on the operation side, and the position where the secondary molding product is ejected is located on the counter operation side, the mold rotating process is performed after the mold opening process is completed, and thereafter, the ejection process is performed.

In the mold closing process, the mold clamping motor 160 is driven to advance the movable platen 120 by advancing the crosshead 151 to a mold closing completion position at a set movement speed. In this manner, the movable die 820 is caused to touch the stationary die 810. For example, a position or a movement speed of the crosshead 151 is detected by using a mold clamping motor encoder 161. The mold clamping motor encoder 161 detects rotation of the mold clamping motor 160, and transmits a signal indicating a detection result thereof to the control device 700.

A crosshead position detector for detecting a position of the crosshead 151 and a crosshead movement speed detector for measuring a movement speed of the crosshead 151 are not limited to the mold clamping motor encoder 161, and a general detector can be used. In addition, a movable platen position detector for detecting a position of the movable platen 120 and a movable platen movement speed detector for measuring a movement speed of the movable platen 120 are not limited to the mold clamping motor encoder 161, and a general detector can be used.

In the pressurizing process, the mold clamping motor 160 is further driven to further advance the crosshead 151 from the mold closing completion position to a mold clamping position, thereby generating a mold clamping force.

In the mold clamping process, the mold clamping motor 160 is driven to maintain a position of the crosshead 151 at the mold clamping position. In the mold clamping process, the first cavity space 801 and the second cavity space 802 are formed between the movable die 820 and the stationary die 810 as illustrated in FIG. 2.

In the depressurizing process, the mold clamping motor 160 is driven to retreat the crosshead 151 from the mold clamping position to a mold opening start position. In this manner, the movable platen 120 is retreated to reduce the mold clamping force. The mold opening start position and the mold closing completion position may be the same position.

In the mold opening process, the mold clamping motor 160 is driven to retreat the crosshead 151 from the mold opening start position to the mold opening completion position at a set movement speed. In this manner, the movable platen 120 is retreated so that the movable die 820 is separated from the stationary die 810.

After the mold opening process is completed and before the subsequent mold closing process starts, the ejection process is performed. In the ejection process which will be described in detail later, the first ejector unit 201 and the second ejector unit 202 eject the second molding product 22 from the movable die 820. After the ejection process is completed and before the subsequent mold closing process starts, the mold rotating process is performed.

In the mold rotating process, the rotary table 190 is rotated, and the first molding product 21 is rotated together with the movable die 820. Thereafter, the mold closing process and the pressurizing process are performed so that the first molding product 21 is disposed in a portion of the second cavity space 802.

Setting conditions in the mold closing process and the pressurizing process are collectively set as a series of setting conditions. For example, the movement speed or positions of the crosshead 151 (including the mold closing start position, the movement speed switching position, the mold closing completion position, and the mold clamping position) and the mold clamping force in the mold closing process and the pressurizing process are collectively set as a series of setting conditions. The mold closing start position, the movement speed switching position, the mold closing completion position, and the mold clamping position are aligned in this order from a rear side toward a front side, and represent a start point and an end point of a section in which the movement speed is set. The movement speed is set for each section. The number of the movement speed switching positions may be one or more. The movement speed switching position may not be set. Only one of the mold clamping position and the mold clamping force may be set.

The setting conditions in the depressurizing process and the mold opening process are set in the same manner . For example, the movement speed or positions (the mold opening start position, the movement speed switching position, and the mold opening completion position) of the crosshead 151 in the depressurizing process and the mold opening process are collectively set as a series of setting conditions. The mold opening start position, the movement speed switching position, and the mold opening completion position are aligned in this order from the front side toward the rear side, and represent the start point and the end point of the section in which the movement speed is set. The movement speed is set for each section. The number of the movement speed switching positions may be one or more. The movement speed switching position may not be set. The mold opening start position and the mold closing completion position may be the same position. In addition, the mold opening completion position and the mold closing start position may be the same position.

Instead of the movement speed or the position of the crosshead 151, the movement speed or the positions of the movable platen 120 may be set. In addition, instead of the position (for example, the mold clamping position) of the crosshead or the position of the movable platen, the mold clamping force may be set.

Incidentally, the toggle mechanism 150 amplifies a driving force of the mold clamping motor 160, and transmits the driving force to the movable platen 120. An amplification magnification is referred to as a toggle magnification. The toggle magnification is changed according to an angle θ (hereinafter, also referred to as a "link angle θ") formed between the first link 152 and the second link 153. The link angle θ is obtained from the position of the crosshead 151. When the link angle θ is 180°, the toggle magnification is maximized.

When a mold space of the mold unit 800 is changed due to replacement of the mold unit 800 or a temperature change in the mold unit 800, mold space adjustment is performed so that a predetermined mold clamping force is obtained during the mold clamping. For example, in the mold space adjustment, the interval L between the stationary platen 110 and the toggle support 130 is adjusted so that the link angle θ of the toggle mechanism 150 becomes a predetermined angle when the movable die 820 touches the stationary die 810.

The mold clamping unit 100 has the mold space adjustment mechanism 180. The mold space adjustment mechanism 180 performs the mold space adjustment by adjusting the interval L between the stationary platen 110 and the toggle support 130. For example, a timing for the mold space adjustment is determined from an end point of a molding cycle to a start point of a subsequent molding cycle. For example, the mold space adjustment mechanism 180, has a screw shaft 181 formed in a rear end portion of the tie bar 140, a screw nut 182 held by the toggle support 130 to be rotatable and not to be advanced and retreated, and a mold space adjustment motor 183 that rotates the screw nut 182 screwed to the screw shaft 181.

The screw shaft 181 and the screw nut 182 are provided for each of the tie bars 140. A rotational driving force of the mold space adjustment motor 183 may be transmitted to a plurality of the screw nuts 182 via a rotational driving force transmitting unit 185. The plurality of screw nuts 182 can be rotated in synchronization with each other. The plurality of screw nuts 182 can be individually rotated by changing a transmission channel of the rotational driving force transmitting unit 185.

For example, the rotational driving force transmitting unit 185 is configured to include a gear. In this case, a driven gear is formed on an outer periphery of each screw nut 182, a driving gear is attached to an output shaft of the mold space adjustment motor 183, and a plurality of intermediate gears meshing with the driven gear and the driving gear are held to be rotatable in a central portion of the toggle support 130. The rotational driving force transmitting unit 185 may be configured to include a belt or a pulley instead of the gear.

An operation of the mold space adjustment mechanism 180 is controlled by the control device 700. The control device 700 drives the mold space adjustment motor 183 to rotate the screw nut 182. As a result, a position of the toggle support 130 with respect to the tie bar 140 is adjusted, and the interval L between the stationary platen 110 and the toggle support 130 is adjusted. In addition, a plurality of the mold space adjustment mechanisms may be used in combination.

The interval L is detected by using the mold space adjustment motor encoder 184. The mold space adjustment motor encoder 184 detects a rotation amount or a rotation direction of the mold space adjustment motor 183, and transmits a signal indicating a detection result thereof to the control device 700. The detection result of the mold space adjustment motor encoder 184 is used in monitoring or controlling the position or the interval L of the toggle support 130. A toggle support position detector for detecting the position of the toggle support 130 and an interval detector for detecting the interval L are not limited to the mold space adjustment motor encoder 184, and a general detector can be used.

The mold clamping unit 100 of the present embodiment is the horizontal type in which the mold opening and closing direction is the horizontal direction, but may be a vertical type in which the mold opening and closing direction is an upward-downward direction.

The mold clamping unit 100 of the present embodiment has the mold clamping motor 160 as a drive source. However, a hydraulic cylinder may be provided instead of the mold clamping motor 160. In addition, the mold clamping unit 100 may have a linear motor for mold opening and closing, and may have an electromagnet for mold clamping.

The temperature measurer 610 measures the temperature of the mold unit 800. The temperature measurer 610 transmits a temperature signal indicating the measured temperature to the control device 700.

The mold temperature controller 600 adjusts the temperature of the mold unit 800. As illustrated in FIG. 4, the mold unit 800 internally includes flow paths 813A, 813B, 813C, and 813D of a temperature control medium. The mold temperature controller 600 adjusts the temperature of the mold unit 800 by adjusting the temperature of the temperature control medium supplied to the flow paths 813A to 813D of the mold unit 800. The mold temperature controller 600 adjusts the temperature in accordance with a control signal from the control device 700. In this manner, the mold temperature controller 600 can realize the temperature control of the mold unit 800, based on the temperature measured by the temperature measurer 610.

### (First Ejector Unit and Second Ejector Unit)

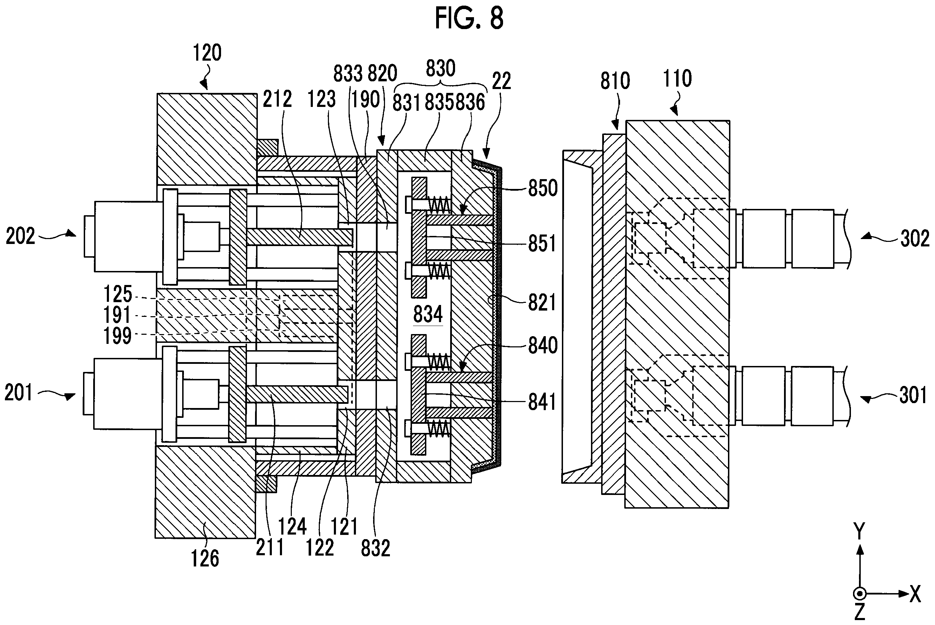

In describing the first ejector unit 201 and the second ejector unit 202 (refer to FIG. 8), similarly to the description of the mold clamping unit 100, a moving direction of the movable platen 120 when the mold closing is performed (for example, a positive direction of the X-axis) will be defined as forward, and a moving direction of the movable platen 120 when the mold opening is performed (for example, a negative direction of the X-axis) will be defined as rearward.

The first ejector unit 201 and the second ejector unit 202 are attached to the movable platen 120, and are advanced and retreated together with the movable platen 120. The first ejector unit 201 and the second ejector unit 202 eject the second molding product 22 from the movable die 820 when the mold opening is performed.

The first ejector unit 201 includes a first ejector rod 211 advanced and retreated with respect to a stationary portion 830 of the movable die 820. The first ejector rod 211 presses a first movable portion 840 of the movable die 820 forward so that the second molding product 22 is separated from the stationary portion 830 of the movable die 820.

The first ejector rod 211 may be connected to the first movable portion 840 of the movable die 820. However, in the present embodiment, the first ejector rod 211 is not connected to the first movable portion 840 of the movable die 820 in order to rotate the movable die 820.

The first ejector rod 211 moves close to and abuts on the first movable portion 840 of the movable die 820 by advancing with respect to the stationary portion 830 of the movable die 820, and separates the second molding product 22 from the stationary portion 830 by pressing the first movable portion 840 forward.

Similarly, the second ejector unit 202 includes a second ejector rod 212 advanced and retreated with respect to the stationary portion 830 of the movable die 820. The second ejector rod 212 separates the second molding product 22 from the stationary portion 830 of the movable die 820 by pressing the second movable portion 850 of the movable die 820 forward.

The second ejector rod 212 may be connected to the second movable portion 850 of the movable die 820. However, in the present embodiment, the second ejector rod 212 is not connected to the second movable portion 850 of the movable die 820 in order to rotate the movable die 820.

The second ejector rod 212 moves close to and abuts on the second movable portion 850 of the movable die 820 by advancing with respect to the stationary portion 830 of the movable die 820, and separates the second molding product 22 from the stationary portion 830 by pressing the second movable portion 850 forward.

The first ejector unit 201 and the second ejector unit 202 are disposed at an interval in the Y-axial direction. On the other hand, the first cavity space 801 and the second cavity space 802 are disposed at an interval in the Z-axial direction perpendicular to the Y-axial direction (refer to FIG. 6).

A direction in which the first ejector unit 201 and the second ejector unit 202 are aligned and a direction in which the first cavity space 801 and the second cavity space 802 are aligned are perpendicular to each other. The direction in which the first ejector unit 201 and the second ejector unit 202 are aligned is the Y-axial direction, for example. The direction in which the first cavity space 801 and the second cavity space 802 are aligned is the Z-axial direction, for example.

The direction in which the first ejector unit 201 and the second ejector unit 202 are aligned and the direction in which the first cavity space 801 and the second cavity space 802 are aligned may be opposite to each other. For example, the direction in which the first ejector unit 201 and the second ejector unit 202 are aligned may be the Z-axial direction. The direction in which the first cavity space 801 and the second cavity space 802 are aligned may be the Y-axial direction.

For example, the second cavity space 802 is disposed above the first cavity space 801 so that the second molding product 22 is unloaded upward of the mold clamping unit 100. In this case, the first ejector rod 211 and the second ejector rod 212 are disposed above a rotation center line 190X of the rotary table 190 (refer to FIG. 3).

For example, the second cavity space 802 may be disposed below the first cavity space 801 so that the second molding product 22 falls downward of the mold clamping unit 100. In this case, the first ejector rod 211 and the second ejector rod 212 are disposed below the rotation center line 190X of the rotary table 190.

The first ejector unit 201 and the second ejector unit 202 are disposed at an interval in the Y-axial direction, and ejects the second molding product 22 elongated in the Y-axial direction, from the movable die 820. The second molding product 22 can be pressed at a plurality of locations in the longitudinal direction of the second molding product 22. Therefore, deformation of the second molding product 22 can be prevented, and damage to the second molding product 22 can be prevented.

The first ejector unit 201 and the second ejector unit 202 perform an ejection process under the control of the control device 700. In the ejection process, the first ejector rod 211 and the second ejector rod 212 are advanced from a standby position to an ejection position at a set movement speed. In this manner, the second molding product 22 is ejected from the movable die 820. Thereafter, in the ejection process, the first ejector rod 211 and the second ejector rod 212 are retreated from the ejection position to the standby position at a set movement speed.

### (First Injection Unit and Second Injection Unit)

In describing the first injection unit 301 and the second injection unit 302 (refer to FIG. 7), unlike the description of the mold clamping unit 100, a moving direction of the screw 330 during filling (for example, the negative direction of the X-axis) will be defined as forward, and a moving direction of the screw 330 during plasticizing (for example, the positive direction of the X-axis) will be defined as rearward.

The first injection unit 301 is installed in a first slide base 303, and the first slide base 303 is disposed to be freely advanced and retreated with respect to the injection unit frame 920. The first injection unit 301 is disposed as to be freely advanced and retreated with respect to the mold unit 800. The first injection unit 301 touches the mold unit 800 (more specifically, the stationary die 810) to fill the first cavity space 801 inside the mold unit 800 with the molding material.

The second injection unit 302 is installed in a second slide base, and the second slide base is disposed to be freely advanced and retreated with respect to the injection unit frame 920. The second injection unit 302 is disposed as to be freely advanced and retreated with respect to the mold unit 800. The second injection unit 302 touches the mold unit 800 (more specifically, the stationary die 810) to fill the second cavity space 802 inside the mold unit 800 with the molding material.

The first injection unit 301 and the second injection unit 302 are disposed at an interval in the Y-axial direction. On the other hand, the first cavity space 801 and the second cavity space 802 are disposed at an interval in the Z-axial direction perpendicular to the Y-axial direction. The molding material for filling the first cavity space 801 by the first injection unit 301 and the molding material for filling the second cavity space 802 by the second injection unit 302 may be different materials, or may be the same material.

The first injection unit 301 and the second injection unit 302 are configured in the same manner. Therefore, hereinafter, the configuration of the first injection unit 301 will be described, and the configuration of the second injection unit 302 will be omitted in the description. For example, the first injection unit 301 has a cylinder 310 that heats the molding material, a nozzle 320 provided in a front end portion of the cylinder 310, a screw 330 disposed to be freely advanced and retreated and rotatable inside the cylinder 310, a plasticizing motor 340 that rotates the screw 330, an injection motor 350 that advances and retreats the screw 330, and a load detector 360 that measures a force transmitted between the injection motor 350 and the screw 330 (refer to FIGS. 1 and 2).

The cylinder 310 heats the molding material supplied into the cylinder 310 from a feed port 311. The cylinder 310 is an example of a plasticizing cylinder, is connected to the first cavity space 801 or the second cavity space 802 formed in the mold unit 800, and heats the molding material supplied into the cylinder 310. In this manner, the cylinder 310 melts the molding material to mold the molding product in the first cavity space 801 or the second cavity space 802. Furthermore, the cylinder 310 on the first injection unit 301 side is regarded as an example of a first plasticizing cylinder connected to the first cavity space 801, and the cylinder 310 on the second injection unit 302 side is regarded as an example of a second plasticizing cylinder connected to the second cavity space 802.

For example, the molding material includes a resin. For example, the molding material is formed in a pellet shape, and is supplied to the feed port 311 in a solid state. The feed port 311 is formed in a rear portion of the cylinder 310. A cooler 312 such as a water-cooling cylinder is provided on an outer periphery of the rear portion of the cylinder 310. In front of the cooler 312, a heating unit 313 such as a band heater and a temperature measurer 314 are provided on an outer periphery of the cylinder 310.

The control device 700 of the present embodiment individually controls the heating unit 313 provided in the cylinder 310 of the first injection unit 301 and the heating unit 313 provided in the cylinder 310 of the second injection unit 302. For example, based on the temperature measured by the temperature measurer 314 provided in the cylinder 310 of the first injection unit 301, the control device 700 performs heating control of the heating unit 313 provided in the cylinder 310 of the first injection unit 301 so that the temperature of the cylinder 310 reaches a target temperature corresponding to the molding material supplied to the cylinder 310 of the first injection unit 301. As another example, based on the temperature measured by the temperature measurer 314 provided in the cylinder 310 of the second injection unit 302, the control device 700 performs heating control of the heating unit 313 provided in the cylinder 310 of the second injection unit 302 so that the temperature of the cylinder 310 reaches a target temperature corresponding to the molding material supplied to the second injection unit 302.

The target temperature corresponding to the molding material is a temperature determined as a target (in other words, a target to be achieved) for completing the temperature raising of the cylinder 310 by performing the temperature raising control when the temperature raising control is performed on the cylinder 310 by the heating unit 313 after the molding material is supplied to the cylinder 310. As the target temperature, different temperatures are set depending on a case of molding or a case of temperature retention.

The cylinder 310 is divided into a plurality of zones in the axial direction (for example, the X-axial direction) of the cylinder 310. The heating unit 313 and the temperature measurer 314 are provided in each of the plurality of zones. The control device 700 controls the heating unit 313 so that a set temperature is set in each of the plurality of zones and a measurement temperature of the temperature measurer 314 reaches the set temperature.

The nozzle 320 is provided in a front end portion of the cylinder 310, and is pressed against the mold unit 800. The heating unit 313 and the temperature measurer 314 are provided on the outer periphery of the nozzle 320. The control device 700 controls the heating unit 313 so that a measurement temperature of the nozzle 320 reaches the set temperature.

The screw 330 is disposed to be rotatable and to be freely advanced and retreated inside the cylinder 310. When the screw 330 is rotated, the molding material is fed forward along a helical groove of the screw 330. The molding material is gradually melted by heat from the cylinder 310 while being fed forward. As the liquid molding material is fed forward of the screw 330 and is accumulated in a front portion of the cylinder 310, the screw 330 is retreated. Thereafter, when the screw 330 is advanced, the liquid molding material accumulated in front of the screw 330 is injected from the nozzle 320, and fills the inside of the mold unit 800.

As a backflow prevention valve for preventing a backflow of the molding material fed rearward from the front of the screw 330 when the screw 330 is pressed forward, a backflow prevention ring 331 is attached to the front portion of the screw 330 to be freely advanced and retreated.

The backflow prevention ring 331 is pressed rearward by the pressure of the molding material in front of the screw 330 when the screw 330 is advanced, and is relatively retreated with respect to the screw 330 to a close position (refer to FIG. 2) for closing a flow path of the molding material. In this manner, the backflow of the molding material accumulated in front of the screw 330 is prevented.

On the other hand, the backflow prevention ring 331 is pressed forward by the pressure of the molding material fed forward along the helical groove of the screw 330 when the screw 330 is rotated, and is relatively advanced with respect to the screw 330 to an open position (refer to FIG. 1) for opening the flow path of the molding material. In this manner, the molding material is fed forward of the screw 330.

The backflow prevention ring 331 may be either a co-rotation type rotating together with the screw 330 or a non-co-rotation type that does not rotate together with the screw 330.

The first injection unit 301 may have a drive source that advances and retreats the backflow prevention ring 331 with respect to the screw 330 between the open position and the close position.

The plasticizing motor 340 rotates the screw 330. The drive source for rotating the screw 330 is not limited to the plasticizing motor 340, and may be a hydraulic pump, for example.

The injection motor 350 advances and retreats the screw 330. A motion conversion mechanism that converts a rotary motion of the injection motor 350 into a linear motion of the screw 330 is provided between the injection motor 350 and the screw 330. For example, the motion conversion mechanism has a screw shaft and a screw nut screwed to the screw shaft. A ball or a roller may be provided between the screw shaft and the screw nut. The drive source that advances and retreats the screw 330 is not limited to the injection motor 350, and may be a hydraulic cylinder, for example.

The load detector 360 detects a force transmitted between the injection motor 350 and the screw 330. The detected force is converted into the pressure by the control device 700. The load detector 360 is provided in a force transmission channel between the injection motor 350 and the screw 330, and detects the force acting on the load detector 360.

The load detector 360 transmits a signal indicating a detection result thereof to the control device 700. The detection result of the load detector 360 is used in controlling or monitoring the pressure received from the molding material by the screw 330, a back pressure acting on the screw 330, or the pressure acting on the molding material from the screw 330.

The pressure detector for detecting the pressure of the molding material is not limited to the load detector 360, and a general detector can be used. For example, a nozzle pressure sensor or a mold internal pressure sensor may be used. The nozzle pressure sensor is installed in the nozzle 320. The mold internal pressure sensor is installed inside the mold unit 800.

In the plasticizing process, the plasticizing motor 340 is driven to rotate the screw 330 at a set rotation speed, and the molding material is fed forward along the helical groove of the screw 330. As a result, the molding material is gradually melted. As the liquid molding material is fed forward of the screw 330 and is accumulated in a front portion of the cylinder 310, the screw 330 is retreated. For example, a rotation speed of the screw 330 is measured by using a plasticizing motor encoder 341. The plasticizing motor encoder 341 detects the rotation of the plasticizing motor 340, and transmits a signal indicating a detection result thereof to the control device 700. A screw rotational speed detector for measuring the rotation speed of the screw 330 is not limited to the plasticizing motor encoder 341, and a general detector can be used.

In the plasticizing process, the injection motor 350 may be driven to apply a preset back pressure to the screw 330 in order to limit sudden retreat of the screw 330. The back pressure applied to the screw 330 is measured by using the load detector 360, for example. The load detector 360 transmits a signal indicating a detection result thereof to the control device 700. When the screw 330 is retreated to a plasticizing completion position and a predetermined amount of the molding material is accumulated in front of the screw 330, the plasticizing process is completed.

The position and the rotation speed of the screw 330 in the plasticizing process are collectively set as a series of setting conditions. For example, a plasticizing start position, a rotating speed switching position, and a plasticizing completion position are set. The positions are aligned in this order from the front side toward the rear side, and represent the start point and the end point of the section in which the rotation speed is set. The rotation speed is set for each section. The number of the rotating speed switching positions may be one or more. The rotating speed switching position may not be set. In addition, the back pressure is set for each section.

In the filling process, the injection motor 350 is driven to advance the screw 330 at a set movement speed, and the first cavity space 801 inside the mold unit 800 is filled with the liquid molding material accumulated in front of the screw 330. The position or the movement speed of the screw 330 is detected by using an injection motor encoder 351, for example. The injection motor encoder 351 detects the rotation of the injection motor 350, and transmits a signal indicating a detection result thereof to the control device 700. When the position of the screw 330 reaches a set position, the filling process is switched to the holding pressure process (so-called V/P switching). The position where the V/P switching is performed will be referred to as a V/P switching position. The set movement speed of the screw 330 may be changed in accordance with the position or a time of the screw 330.

The position and the movement speed of the screw 330 in the filling process are collectively set as a series of setting conditions. For example, a filling start position (also referred to as an "injection start position"), the movement speed switching position, and the V/P switching position are set. The positions are aligned in this order from the rear side toward the front side, and represent the start point and the end point of the section in which the movement speed is set. The movement speed is set for each section. The number of the movement speed switching positions may be one or more. The movement speed switching position may not be set.

An upper limit value of the pressure of the screw 330 is set for each section in which the movement speed of the screw 330 is set. The pressure of the screw 330 is measured by the load detector 360. When the pressure of the screw 330 is equal to or lower than a setting pressure, the screw 330 is advanced at a set movement speed. On the other hand, when the pressure of the screw 330 exceeds the setting pressure, in order to protect the mold, the screw 330 is advanced at the movement speed lower than the set movement speed so that the pressure of the screw 330 is equal to or lower than the setting pressure.

After the position of the screw 330 reaches the V/P switching position in the filling process, the screw 330 may be temporarily stopped at the V/P switching position, and thereafter, the V/P switching may be performed. Immediately before the V/P switching, instead of stopping the screw 330, the screw 330 may be advanced at a low speed, or may be retreated at a low speed. In addition, a screw position detector for detecting the position of the screw 330 and a screw movement speed detector for measuring the movement speed of the screw 330 are not limited to the injection motor encoder 351, and a general detector can be used.

In the holding pressure process, the injection motor 350 is driven to press the screw 330 forward. A pressure (hereinafter, also referred to as a "holding pressure") of the molding material in the front end portion of the screw 330 is held at a setting pressure, and the molding material remaining inside the cylinder 310 is pressed toward the mold unit 800. The molding material which is insufficient due to cooling shrinkage inside the mold unit 800 can be replenished. The holding pressure is measured by using the load detector 360, for example. The load detector 360 transmits a signal indicating a detection result thereof to the control device 700. A setting value of the holding pressure may be changed depending on an elapsed time from the start of the holding pressure process . The holding pressure and a holding time for holding the holding pressure in the holding pressure process may be respectively set, or may be collectively set as a series of setting conditions.

In the holding pressure process, the molding material in the first cavity space 801 inside the mold unit 800 is gradually cooled, and when the holding pressure process is completed, an inlet of the first cavity space 801 is closed by the solidified molding material. This state is referred to as gate seal, and prevents the backflow of the molding material from the first cavity space 801. After the holding pressure process, a cooling process starts. In the cooling process, the molding material inside the first cavity space 801 is solidified. In order to shorten a molding cycle time, the plasticizing process may be performed during the cooling process.

The first injection unit 301 of the present embodiment is an in-line screw type, but may be a pre-plastic type. The injection unit of the pre-plastic type supplies the molding material melted inside a plasticizing cylinder to an injection cylinder, and the molding material is injected into the mold unit 800 from the injection cylinder. Inside the plasticizing cylinder, the screw is disposed to be rotatable and not to be advanced and retreated, or the screw is disposed to be rotatable and to be freely advanced and retreated. On the other hand, a plunger is disposed to be freely advanced and retreated inside the injection cylinder.

In addition, the first injection unit 301 of the present embodiment is a horizontal type in which the axial direction of the cylinder 310 is a horizontal direction, but may be a vertical type in which the axial direction of the cylinder 310 is an upward-downward direction. The mold clamping unit combined with the first injection unit 301 of the vertical type may be the vertical type or the horizontal type. Similarly, the mold clamping unit combined with the first injection unit 301 of the horizontal type may be the horizontal type or the vertical type.

### (First Moving Unit and Second Moving Unit)

In describing the first moving unit 401 and the second moving unit (not illustrated), similarly to the description of the first injection unit 301 and the second injection unit 302, a moving direction of the screw 330 during the filling (for example, the negative direction of the X-axis) will be defined as forward, and a moving direction of the screw 330 during the plasticizing (for example, the positive direction of the X-axis) will be defined as rearward.

The first moving unit 401 advances and retreats the first injection unit 301 with respect to the mold unit 800. In addition, the first moving unit 401 presses the nozzle 320 of the first injection unit 301 against the mold unit 800, thereby generating a nozzle touch pressure.

The second moving unit advances and retreats the second injection unit 302 with respect to the mold unit 800. In addition, the second moving unit presses the nozzle of the second injection unit 302 against the mold unit 800, thereby generating a nozzle touch pressure.

The first moving unit 401 and the second moving unit are disposed at an interval in the Y-axial direction. The first moving unit 401 and the second moving unit independently advance and retreat the first injection unit 301 and the second injection unit 302.

The first moving unit 401 and the second moving unit are configured in the same manner. Therefore, hereinafter, the configuration of the first moving unit 401 will be described, and the configuration of the second moving unit will be omitted in the description. The first moving unit 401 includes a hydraulic pump 410, a motor 420 serving as a drive source, and a hydraulic cylinder 430 serving as a hydraulic actuator (refer to FIG. 1 and 2).

The hydraulic pump 410 has a first port 411 and a second port 412. The hydraulic pump 410 is a pump that can rotate in both directions, and switches rotation directions of the motor 420. In this manner, a hydraulic fluid (for example, oil) is sucked from any one of the first port 411 and the second port 412, and is discharged from the other to generate a hydraulic pressure. The hydraulic pump 410 can suck the hydraulic fluid from a tank, and can discharge the hydraulic fluid from any one of the first port 411 and the second port 412.

The motor 420 operates the hydraulic pump 410. The motor 420 drives the hydraulic pump 410 in a rotation direction and with a rotation torque in accordance with a control signal transmitted from the control device 700. The motor 420 may be an electric motor, or may be an electric servo motor.

The hydraulic cylinder 430 has a cylinder body 431, a piston 432, and a piston rod 433. The cylinder body 431 is fixed to the first injection unit 301. The piston 432 partitions the inside of the cylinder body 431 into a front chamber 435 serving as a first chamber and a rear chamber 436 serving as a second chamber. The piston rod 433 is fixed to the stationary platen 110.

The front chamber 435 of the hydraulic cylinder 430 is connected to the first port 411 of the hydraulic pump 410 via a first flow path 413. The hydraulic fluid discharged from the first port 411 is supplied to the front chamber 435 via the first flow path 413. In this manner, the first injection unit 301 is pressed forward. The first injection unit 301 is advanced, and the nozzle 320 of the first injection unit 301 is pressed against the stationary die 810. The front chamber 435 functions as a pressure chamber that generates the nozzle touch pressure of the nozzle 320 by the pressure of the hydraulic fluid supplied from the hydraulic pump 410.

On the other hand, the rear chamber 436 of the hydraulic cylinder 430 is connected to the second port 412 of the hydraulic pump 410 via a second flow path 414. The hydraulic fluid discharged from the second port 412 is supplied to the rear chamber 436 of the hydraulic cylinder 430 via the second flow path 414. In this manner, the first injection unit 301 is pressed rearward. The first injection unit 301 is retreated, and the nozzle 320 of the first injection unit 301 is separated from the stationary die 810.

In the present embodiment, the first moving unit 401 includes the hydraulic cylinder 430, but the present invention is not limited thereto. For example, instead of the hydraulic cylinder 430, an electric motor and a motion conversion mechanism that converts a rotary motion of the electric motor into a linear motion of the first injection unit 301 may be used.

### (Control Device)

For example, the control device 700 is configured to include a computer, and has a central processing unit (CPU) 701, a storage medium 702 such as a memory, an input interface 703, and an output interface 704 as illustrated in FIGS. 1 and 2. The control device 700 performs various types of control by causing the CPU 701 to execute a program stored in the storage medium 702. In addition, the control device 700 receives a signal from the outside through the input interface 703, and transmits the signal to the outside through the output interface 704.

The control device 700 repeatedly performs the plasticizing process, the mold closing process, the pressurizing process, the mold clamping process, the filling process, the holding pressure process, the cooling process, the depressurizing process, the mold opening process, the ejection process, and the mold rotating process, thereby repeatedly manufacturing the molding product. A series of operations for obtaining the molding product, for example, an operation from the start of the plasticizing process to the start of the subsequent plasticizing process will be referred to as a "shot" or a "molding cycle". In addition, a time required for one shot will be referred to as a "molding cycle time" or a "cycle time".

For example, in one molding cycle, the plasticizing process, the mold closing process, the pressurizing process, the mold clamping process, the filling process, the holding pressure process, the cooling process, the depressurizing process, the mold opening process, the ejection process, and the mold rotating process are performed in this order. The order described here is the order of the start times of the respective processes. The filling process, the holding pressure process, and the cooling process are performed during the mold clamping process. The start of the mold clamping process may coincide with the start of the filling process. Completion of the depressurizing process coincides with start of the mold opening process.

A plurality of processes may be performed at the same time in order to shorten the molding cycle time. For example, the plasticizing process may be performed during the cooling process of the previous molding cycle or may be performed during the mold clamping process. In this case, the mold closing process may be performed in an initial stage of the molding cycle. In addition, the filling process may start during the mold closing process. In addition, the ejection process may start during the mold opening process. When an on-off valve for opening and closing the flow path of the nozzle 320 is provided, the mold opening process may start during the plasticizing process. The reason is as follows. Even when the mold opening process starts during the plasticizing process, when the on-off valve closes the flow path of the nozzle 320, the molding material does not leak from the nozzle 320.

One molding cycle may include a process other than the plasticizing process, the mold closing process, the pressurizing process, the mold clamping process, the filling process, the holding pressure process, the cooling process, the depressurizing process, the mold opening process, the ejection process, and the mold rotating process.

For example, after the holding pressure process is completed and before the plasticizing process starts, a pre-plasticizing suck-back process of retreating the screw 330 to a preset plasticizing start position may be performed. The pressure of the molding material accumulated in front of the screw 330 before the plasticizing process starts can be reduced, and it is possible to prevent the screw 330 from being rapidly retreated when the plasticizing process starts.

In addition, after the plasticizing process is completed and before the filling process starts, a post-plasticizing suck-back process may be performed in which the screw 330 is retreated to a preset filling start position (also referred to as an "injection start position") . The pressure of the molding material accumulated in front of the screw 330 before the filling process starts can be reduced, and can prevent a leakage of the molding material from the nozzle 320 before the filling process starts.

The control device 700 is connected to an operation unit 750 that receives an input operation of a user, and a display unit 760 that displays a screen. For example, the operation unit 750 and the display unit 760 may be configured to include a touch panel 770, and may be integrated with each other. The touch panel 770 serving as the display unit 760 displays the screen under the control of the control device 700. For example, the screen of the touch panel 770 may display information such as settings of the injection molding machine 10, and a current state of the injection molding machine 10. In addition, for example, the screen of the touch panel 770 may display a button for receiving the input operation of the user or an operation unit such as an input field. The touch panel 770 serving as the operation unit 750 detects an input operation of the user on the screen, and outputs a signal corresponding to the input operation to the control device 700. In this manner, for example, while confirming information displayed on the screen, the user can perform settings (including an input of a setting value) of the injection molding machine 10 by operating the operation unit provided on the screen. In addition, the user can operate the injection molding machine 10 corresponding to the operation unit by operating the operation unit provided on the screen. For example, the operation of the injection molding machine 10 may be the operations (including stopping) of the mold clamping unit 100, the first ejector unit 201, the second ejector unit 202, the first injection unit 301, the second injection unit 302, the first moving unit 401, and the second moving unit. In addition, the operation of the injection molding machine 10 may be switching between the screens displayed on the touch panel 770 serving as the display unit 760.

A case has been described in which the operation unit 750 and the display unit 760 of the present embodiment are integrated with each other as the touch panel 770. However, both of these may be independently provided. In addition, a plurality of the operation units 750 may be provided. The operation unit 750 and the display unit 760 are disposed on the operation side (negative direction of the Y-axis) of the mold clamping unit 100 (more specifically, the stationary platen 110).

### (Separation Control of Molding Product)

As illustrated in FIG. 5, the movable platen 120 includes a front surface plate 121, an intermediate block 124, a rear block 126, and a toggle link attachment portion 128. The front surface plate 121, the intermediate block 124, the rear block 126, and the toggle link attachment portion 128 may be separately formed and connected to each other, or may be integrally formed by means of casting.

The front surface plate 121 supports the rotary table 190 to be rotatable. The front surface plate 121 has a first through-hole 122 in which the first ejector rod 211 is disposed to be freely advanced and retreated. Similarly, the front surface plate 121 has a second through-hole 123 in which the second ejector rod 212 is disposed to be freely advanced and retreated.

The intermediate block 124 is disposed inside in the radial direction of the cylindrical rotation cylinder 195 extending rearward from the outer peripheral portion of the rotary table 190. A space in which the first ejector unit 201 is disposed and a space in which the second ejector unit 202 is disposed are formed inside the intermediate block 124 (refer to FIG. 7) . The front surface plate 121 is attached to a front end surface of the intermediate block 124. As illustrated by a broken line in FIG. 7, the front surface plate 121 and the intermediate block 124 have an insertion hole 125 into which the rotary shaft 191 of the rotary table 190 is inserted via the bearing 199.

The rear block 126 supports the driven gear 196 to be rotatable. The rear block 126 is formed in a rectangular shape when viewed in the X-axial direction (refer to FIG. 3). Each of four corner portions of the rear block 126 has an insertion hole 127 into which the tie bar 140 is inserted. A cutout may be formed instead of the insertion hole 127. A space in which the first ejector unit 201 is disposed and a space in which the second ejector unit 202 is disposed are formed inside the rear block 126 (refer to FIG. 7).

A pair of the toggle link attachment portions 128 are provided at an interval in the Z-axial direction in a central portion in the Y-axial direction of a rear end surface of the rear block 126. Each of the pair of toggle link attachment portions 128 has a plurality of toggle link attachment plates perpendicular to the Y-axial direction at an interval in the Y-axial direction. Each of the plurality of toggle link attachment plates is ejected rearward from the rear end surface of the rear block 126, and has a pin hole 129 in a tip portion thereof. A pin is inserted into the pin hole 129, and the first link 152 (refer to FIGS. 1 and 2) is oscillatingly attached to the toggle link attachment portion 128 via the pin.

As illustrated in FIG. 4, when the mold clamping is performed, the first movable molding surface 821 and the first stationary molding surface 811 form the first cavity space 801, and the second movable molding surface 822 and the second stationary molding surface 812 form the second cavity space 802. The molding material is supplied from the first injection unit 301 to the first cavity space 801, and the first molding product 21 is molded.

As illustrated in FIG. 4, the first molding product 21 is molded in the first cavity space 801 when the mold clamping is performed, and is rotated together with the movable die 820 by 180° without being ejected from the movable die 820 when the mold opening is performed as illustrated in FIG. 5. Thereafter, when the mold clamping is performed as illustrated in FIG. 6, the first molding product 21 is disposed in a portion of the second cavity space 802, and becomes a portion of the second molding product 22.

When the mold clamping is performed as illustrated in FIG. 6, the second movable molding surface 822 and the first stationary molding surface 811 form the first cavity space 801, and the first movable molding surface 821 and the second stationary molding surface 812 form the second cavity space 802. The molding material is supplied from the second injection unit 302 to the second cavity space 802, and the second molding product 22 is molded. Concurrently with the molding of the second molding product 22, the molding material is supplied from the first injection unit 301 to the first cavity space 801, and the first molding product 21 is molded. Thereafter, the mold opening illustrated in FIG. 8 is performed.

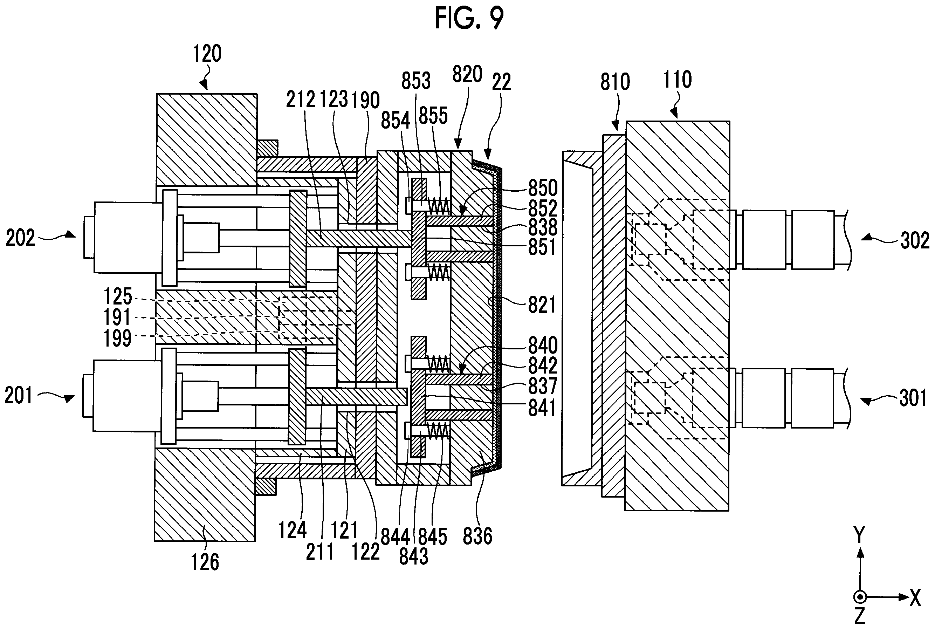

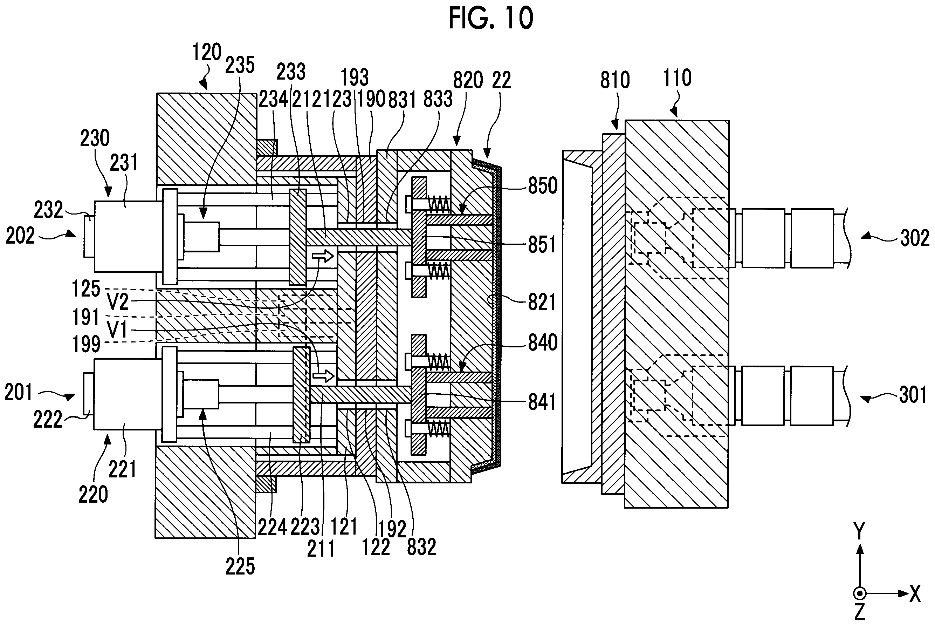

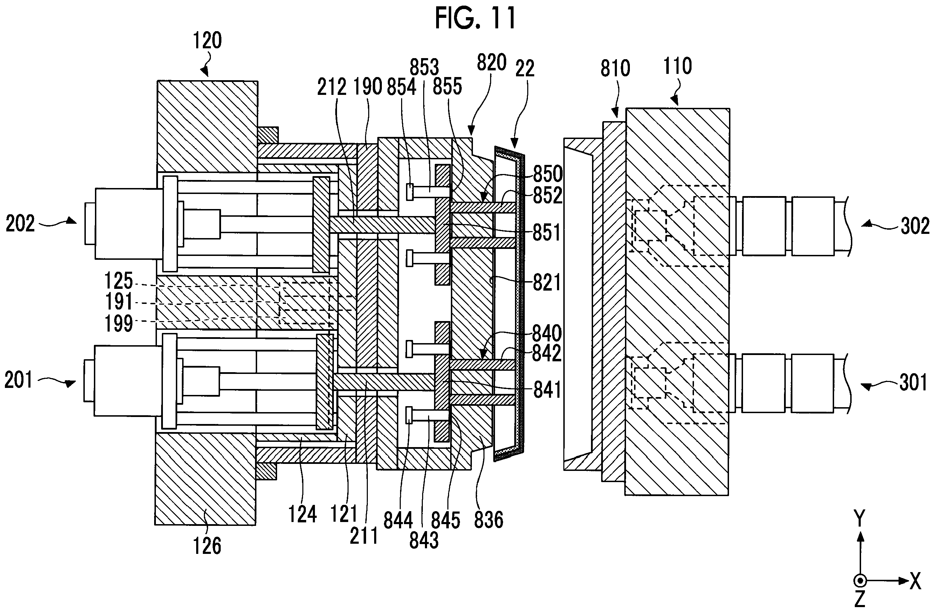

FIG. 8 is a sectional view illustrating an example of a state of the injection molding machine when the mold opening is performed. FIG. 9 is a sectional view illustrating an example of a state of the injection molding machine when the second ejector rod abuts on the second ejector plate before the first ejector rod abuts on the first ejector plate. FIG. 10 is a sectional view illustrating an example of a state of the injection molding machine when the first ejector rod abuts on the first ejector plate and at the same time, the second ejector rod abuts on the second ejector plate. FIG. 11 is a sectional view illustrating an example of a state of the injection molding machine when the first ejector rod and the second ejector rod are located at ejection positions. The X-axial direction, the Y-axial direction, and the Z-axial direction in FIGS. 8 to 11 are directions the same as the X-axial direction, the Y-axial direction, and the Z-axial direction in FIGS. 1 to 2.

As illustrated in FIG. 8, the movable die 820 includes the stationary portion 830 that cannot be advanced and retreated with respect to the movable platen 120, the first movable portion 840 that can be advanced and retreated with respect to the movable platen 120, and the second movable portion 850 that can be advanced and retreated with respect to the movable platen 120.

The stationary portion 830 of the movable die 820 includes a movable attachment plate 831 attached to the rotary table 190, a spacer block 835 forming a space 834 in front of the movable attachment plate 831, and a movable die plate 836 fixed to the movable attachment plate 831 via the spacer block 835.

The movable attachment plate 831 has a first through-hole 832 which the first ejector rod 211 is inserted into and removed from. A plurality of the first through-holes 832 are formed around the rotation center line 190X of the rotary table 190 (refer to FIG. 3) . The plurality of first through-holes 832 are rotationally symmetrically disposed, and are rotationally symmetrically disposed by 180°, for example.

Similarly, the movable attachment plate 831 has a second through-hole 833 which the second ejector rod 212 is inserted into and removed from. A plurality of second through-holes 833 are formed around the rotation center line 190X of the rotary table 190 (refer to FIG. 3). The plurality of second through-holes 833 are rotationally symmetrically disposed, and are rotationally symmetrically disposed by 180°, for example.

The spacer block 835 forms the space 834 between the movable attachment plate 831 and the movable die plate 836. A first ejector plate 841 (to be described later) and a second ejector plate 851 (to be described later) are disposed to be freely advanced and retreated in the space 834.

The movable die plate 836 includes the first movable molding surface 821 and the second movable molding surface 822 on a surface facing the stationary die 810. The first movable molding surface 821 and the second movable molding surface 822 respectively and sequentially form a portion of the wall surface of the first cavity space 801 and a portion of the wall surface of the second cavity space 802 (refer to FIGS. 4 and 6).

As illustrated in FIG. 9, the first movable portion 840 of the movable die 820 includes the first ejector plate 841 disposed perpendicular to the X-axial direction and a rod-shaped first ejector pin 842 extending forward from the first ejector plate 841.

The first ejector plate 841 is advanced and retreated along the first guide pin 843. A front end portion of the first guide pin 843 is attached to the movable die plate 836. On the other hand, a first stopper 844 for stopping the retreat of the first ejector plate 841 is attached to a rear end portion of the first guide pin 843.

The first ejector plate 841 is biased from the movable die plate 836 toward the first stopper 844 by a first return spring 845. The movable attachment plate 831 may also serve as the first stopper 844. In this case, the rear end portion of the first guide pin 843 is attached to the movable attachment plate 831.

The first ejector pin 842 is disposed to be freely advanced and retreated in the first through-hole 837 penetrating the movable die plate 836. The first through-hole 837 is formed in each of the first movable molding surface 821 and the second movable molding surface 822 (refer to FIG. 3).

The first ejector plate 841 is pressed against the first stopper 844 by a biasing force of the first return spring 845. In this case, a front end surface of the first ejector pin 842 is flush with the first movable molding surface 821 or the second movable molding surface 822.

The first ejector plate 841 is advanced against the biasing force of the first return spring 845. In this case, the front end surface of the first ejector pin 842 is ejected forward from the first movable molding surface 821 or the second movable molding surface 822.

A plurality of the first movable portions 840 are disposed so that the second molding product 22 is independently separated from the first movable molding surface 821 and the second molding product 22 is independently separated from the second movable molding surface 822. The plurality of first movable portions 840 are rotationally symmetrically disposed around the rotation center line 190X of the rotary table 190, and are rotationally symmetrically disposed by 180°, for example.

As illustrated in FIG. 9, the second movable portion 850 of the movable die 820 includes the second ejector plate 851 disposed perpendicular to the X-axial direction and a rod-shaped second ejector pin 852 extending forward from the second ejector plate 851.

The second ejector plate 851 is advanced and retreated along the second guide pin 853. A front end portion of the second guide pin 853 is attached to the movable die plate 836. On the other hand, a second stopper 854 for stopping the retreat of the second ejector plate 851 is attached to a rear end portion of the second guide pin 853.

The second ejector plate 851 is biased from the movable die plate 836 toward the second stopper 854 by a second return spring 855. The movable attachment plate 831 may also serve as the second stopper 854. In this case, the rear end portion of the second guide pin 853 is attached to the movable attachment plate 831.

The second ejector pin 852 is disposed to be freely advanced and retreated in the second through-hole 838 penetrating the movable die plate 836. The second through-hole 838 is formed in each of the first movable molding surface 821 and the second movable molding surface 822 (refer to FIG. 3).

The second ejector plate 851 is pressed against the second stopper 854 by the biasing force of the second return spring 855. In this case, the front end surface of the second ejector pin 852 is flush with the first movable molding surface 821 or the second movable molding surface 822.

The second ejector plate 851 is advanced against the biasing force of the second return spring 855. In this case, the front end surface of the second ejector pin 852 is ejected forward from the first movable molding surface 821 or the second movable molding surface 822.

A plurality of the second movable portions 850 are disposed so that the second molding product 22 is independently separated from the first movable molding surface 821 and the second molding product 22 is independently separated from the second movable molding surface 822. The plurality of second movable portions 850 are rotationally symmetrically disposed around the rotation center line 190X of the rotary table 190, and are rotationally symmetrically disposed by 180°, for example.

The first ejector plate 841 of the first movable portion 840 and the second ejector plate 851 of the second movable portion 850 are individually provided in the present embodiment, but may be integrally formed. Any configuration can be adopted as long as the second molding product 22 is independently separated from the first movable molding surface 821 and the second molding product 22 is independently separated from the second movable molding surface 822.

As illustrated in FIG. 10, the first ejector unit 201 includes a first drive mechanism 220 that advances and retreats the first ejector rod 211 with respect to the movable platen 120. For example, the first drive mechanism 220 includes a first ejector motor 221 and a first motion conversion mechanism 225 that converts a rotary motion of the first ejector motor 221 into a linear motion of the first crosshead 223.

The first motion conversion mechanism 225 includes a screw shaft and a screw nut screwed to the screw shaft. A ball or a roller may be interposed between the screw shaft and the screw nut. The rear end portion of the first ejector rod 211 is attached to the first crosshead 223, and the first ejector rod 211 is advanced and retreated together with the first crosshead 223.

The first drive mechanism 220 includes a guide bar 224 that guides the first crosshead 223. The front end portion of the guide bar 224 is attached to the front surface plate 121 of the movable platen 120. The first ejector rod 211 is disposed to be freely advanced and retreated in the first through-hole 122 of the front surface plate 121 of the movable platen 120.

The first drive mechanism 220 advances the first ejector rod 211 from the standby position (refer to FIG. 8), and inserts the first ejector rod 211 into the first through-hole 192 of the rotary table 190. A plurality of the first through-holes 192 are formed around the rotation center line 190X of the rotary table 190. The plurality of first through-holes 192 are rotationally symmetrically disposed, and are rotationally symmetrically disposed by 180°, for example (refer to FIG. 3) .

Subsequently, the first drive mechanism 220 further advances the first ejector rod 211, inserts the first ejector rod 211 into the first through-hole 832 of the movable attachment plate 831 of the movable die 820, and abuts on the first ejector plate 841 of the movable die 820 (refer to FIG. 10).

Subsequently, the first drive mechanism 220 further advances the first ejector rod 211 to the ejection position (refer to FIG. 11), and advances the first ejector plate 841 and the first ejector pin 842. The front end surface of the first ejector pin 842 is ejected forward from the first movable molding surface 821 or the second movable molding surface 822 of the movable die 820, and the second molding product 22 is separated from the first movable molding surface 821 or the second movable molding surface 822.

Thereafter, the first drive mechanism 220 retreats the first ejector rod 211 from the ejection position (refer to FIG. 11), and pulls out the first ejector rod 211 from the first through-hole 832 of the movable attachment plate 831 of the movable die 820. As a result, the first return spring 845 retreats the first ejector plate 841 to the first stopper 844.

Subsequently, the first drive mechanism 220 retreats the first ejector rod 211 to the standby position (refer to FIG. 8), and pulls out the first ejector rod 211 from the first through-hole 192 of the rotary table 190. In this state, the rotary table 190 is rotated by 180°.

The control device 700 controls the position of the first ejector rod 211, when the first ejector rod 211 is advanced from the standby position to the ejection position. The control device 700 supplies a current to the first ejector motor 221, based on a deviation ΔX1 (ΔX1=X1s-X1d) between a setting value X1s of the position of the first ejector rod 211 and a detection value X1d of the position of the first ejector rod 211.

For example, the position of the first ejector rod 211 is detected by using a first ejector motor encoder 222. The first ejector motor encoder 222 detects the rotation of the first ejector motor 221, and transmits a signal indicating a detection result thereof to the control device 700. The first ejector rod position detector that detects the position of the first ejector rod 211 is not limited to the first ejector motor encoder 222, and a general detector can be used.

As illustrated in FIG. 10, the second ejector unit 202 includes a second drive mechanism 230 that advances and retreats the second ejector rod 212 with respect to the movable platen 120. For example, the second drive mechanism 230 includes a second ejector motor 231 and a second motion conversion mechanism 235 that converts a rotary motion of the second ejector motor 231 into a linear motion of the second crosshead 233.

The second motion conversion mechanism 235 includes a screw shaft and a screw nut screwed to the screw shaft. A ball or a roller may be interposed between the screw shaft and the screw nut. The rear end portion of the second ejector rod 212 is attached to the second crosshead 233, and the second ejector rod 212 is advanced and retreated together with the second crosshead 233.

The second drive mechanism 230 includes a guide bar 234 that guides the second crosshead 233. The front end portion of the guide bar 234 is attached to the front surface plate 121 of the movable platen 120. The second ejector rod 212 is disposed to be freely advanced and retreated in the second through-hole 123 of the front surface plate 121 of the movable platen 120.

The second drive mechanism 230 and the first drive mechanism 220 are independently provided, and the second crosshead 233 and the first crosshead 223 are independently advanced and retreated. Compared to a case where the second crosshead 233 and the first crosshead 223 are integrally formed, that is, compared to a case where one ejector unit is used, the crosshead can be miniaturized, and the driving force of the crosshead can be reduced. In addition, a general-purpose motor can be used as the ejector motor.

The second drive mechanism 230 advances the second ejector rod 212 from the standby position (refer to FIG. 8), and inserts the second ejector rod 212 into the second through-hole 193 of the rotary table 190. A plurality of the second through-holes 193 are formed around the rotation center line 190X of the rotary table 190. The plurality of second through-holes 193 are rotationally symmetrically disposed, and are rotationally symmetrically disposed by 180°, for example (refer to FIG. 3) .

Subsequently, the second drive mechanism 230 further advances the second ejector rod 212, inserts the second ejector rod 212 into the second through-hole 833 of the movable attachment plate 831 of the movable die 820, and abuts on the second ejector plate 851 of the movable die 820 (refer to FIGS. 9 and 10).

Subsequently, the second drive mechanism 230 further advances the second ejector rod 212 to the ejection position (refer to FIG. 11), and advances the second ejector plate 851 and the second ejector pin 852. The front end surface of the second ejector pin 852 is ejected forward from the first movable molding surface 821 or the second movable molding surface 822 of the movable die 820, and the second molding product 22 is separated from the first movable molding surface 821 or the second movable molding surface 822. The separated second molding product 22 is unloaded outward of the injection molding machine 10.

Thereafter, the second drive mechanism 230 retreats the second ejector rod 212 from the ejection position (refer to FIG. 11), and pulls out the second ejector rod 212 from the second through-hole 833 of the movable attachment plate 831 of the movable die 820. As a result, the second return spring 855 retreats the second ejector plate 851 to the second stopper 854.

Subsequently, the second drive mechanism 230 retreats the second ejector rod 212 to the standby position (refer to FIG. 8), and pulls out the second ejector rod 212 from the second through-hole 193 of the rotary table 190. In this state, the rotary table 190 is rotated by 180°.

The control device 700 controls the position of the second ejector rod 212, when the second ejector rod 212 is advanced from the standby position to the ejection position. The control device 700 supplies a current to the second ejector motor 231, based on a deviation ΔX2 (ΔX2=X2s-X2d) between a setting value X2s of the position of the second ejector rod 212 and a detection value X2d of the position of the second ejector rod 212.

For example, the position of the second ejector rod 212 is detected by using a second ejector motor encoder 232. The second ejector motor encoder 232 detects the rotation of the second ejector motor 231, and transmits a signal indicating a detection result thereof to the control device 700. The second ejector rod position detector that detects the position of the second ejector rod 212 is not limited to the second ejector motor encoder 232, and a general detector can be used.

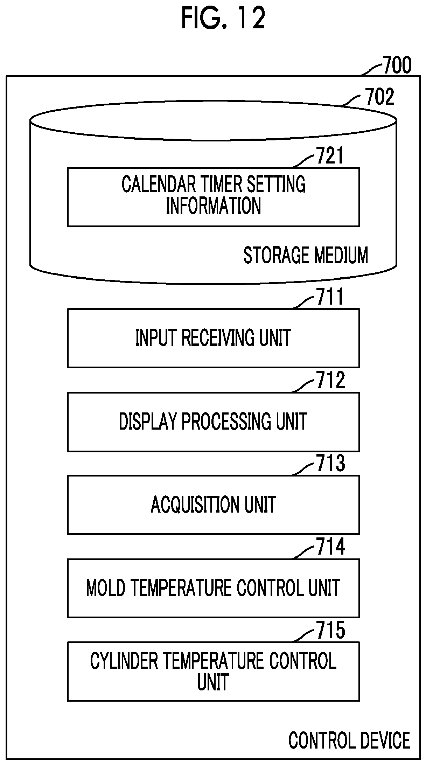

FIG. 12 is a functional block view illustrating components of the control device according to an embodiment. Each functional block illustrated in FIG. 12 is conceptual, and may not necessarily be configured to be physical as illustrated. All or a portion of each functional block can be configured to be functionally or physically distributed and integrated in any desired unit. All or any desired portion of each processing function performed in each functional block may be realized by a program executed by a CPU, or may be realized as hardware by a wired logic. As illustrated in FIG. 12, the control device 700 includes an input receiving unit 711, a display processing unit 712, an acquisition unit 713, a mold temperature control unit 714, and a cylinder temperature control unit 715. The input receiving unit 711 receives an input operation of a user from the operation unit 750 via an input interface 703. The display processing unit 712 performs display control for displaying a display screen corresponding to the input operation in the operation unit 750 on the display unit 760. The acquisition unit 713 acquires a temperature signal relating to the mold unit 800 from the temperature measurer 610, and acquires a temperature signal relating to the cylinder 310 from the temperature measurer 314. The mold temperature control unit 714 controls the temperature raising of the mold unit 800 by using the mold temperature controller 600, based on the temperature of the mold unit 800 which is indicated by the temperature signal acquired by the acquisition unit 713. The cylinder temperature control unit 715 controls the temperature raising of the cylinder 310 by using the heating unit 313, based on the temperature of the cylinder 310 which is indicated by the temperature signal acquired by the acquisition unit 713. Specific description of each configuration will be described later.

In addition, the storage medium 702 of the control device 700 includes calendar timer setting information 721. The calendar timer setting information 721 is information indicating conditions for individually starting temperature raising of the heating unit 313 provided in the cylinder 310 of the first injection unit 301 (hereinafter, referred to as the heating unit 313 on the first injection unit 301 side) and the heating unit 313 provided in the cylinder 310 of the second injection unit 302 (hereinafter, referred to as the heating unit 313 on the second injection unit 302 side).

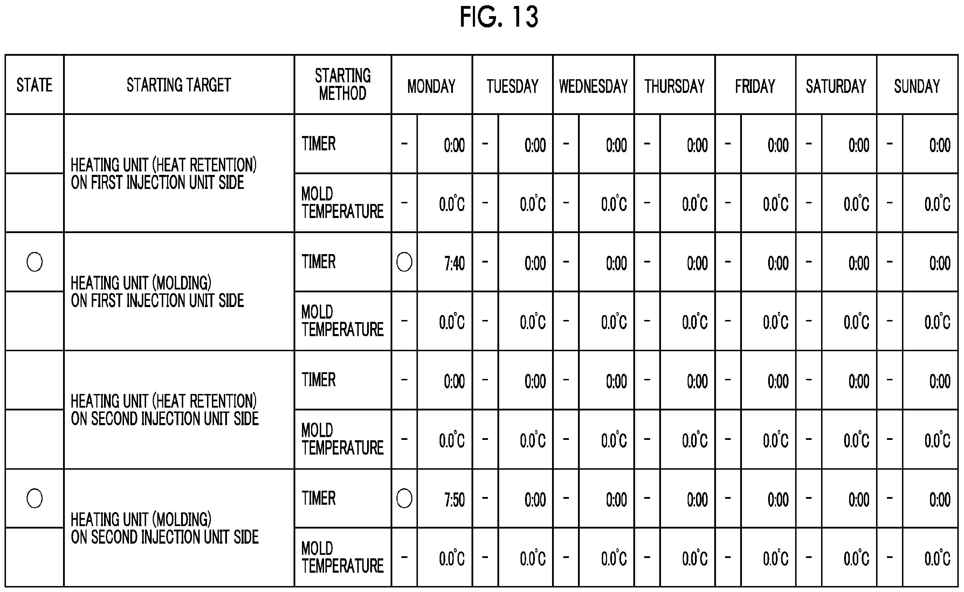

FIG. 13 is a view illustrating a first example of the calendar timer setting information 721. As illustrated in FIG. 13, as the calendar timer setting information 721, conditions for starting the temperature raising of each of the heating unit 313 (heat retention) on the first injection unit 301 side, the heating unit 313 (molding) on the first injection unit 301 side, the heating unit 313 (heat retention) on the second injection unit 302 side, and the heating unit 313 (molding) on the second injection unit 302 side are set.

As a record of the "heating unit (heat retention) on the first injection unit side" illustrated in FIG. 13, a condition for starting the temperature raising of the cylinder 310 of the first injection unit 301 to a heat retention temperature is set. As a record of the "heating unit (molding) on the first injection unit side", a condition for starting to the temperature raising of the first injection unit 301 to a molding temperature is set. The heat retention temperature is a temperature at which the molding is not immediately performed although a time required until the molding needs to be shortened compared to a normal temperature. For example, it is conceivable to set the heat retention temperature when a peripheral unit such as an unloading unit is prepared for the injection molding machine 10 or during a lunch break.

As a record of the "heating unit (heat retention) on the second injection unit side" illustrated in FIG. 13, a condition for starting the temperature raising of the cylinder 310 of the second injection unit 302 to the heat retention temperature is set. As a record of the "heating unit (molding) on the second injection unit side", a condition for starting to the temperature raising of the cylinder 310 of the second injection unit 302 to the molding temperature is set.

A "state" has a flag indicating whether or not to use the condition set in the record. When "o" is set in the "state", the state indicates that the condition is used.

A "starting method" indicates a method for starting the temperature raising. As illustrated in FIG. 13, any one of a "timer" and a "mold temperature" is set. In a case of the "timer", the method indicates that the temperature raising starts at a time set for each day of the week. In a case of the "mold temperature", the method indicates that the temperature raising starts when the temperature of the mold unit 800 reaches a temperature set for each day of the week.

As illustrated in FIG. 13, a time to start the temperature raising or the mold temperature at which the temperature raising starts for each day of the week indicated by "Monday", "Tuesday", "Wednesday", "Thursday", "Friday", "Saturday", and "Sunday" can be set.

In the calendar timer setting information 721, it is possible to set any one or more of the time at which the temperature raising starts and the temperatures of the mold unit 800 for which the temperature raising starts for each day of the week, with respect to the heating unit 313 on the first injection unit 301 side and the heating unit 313 on the second injection unit 302 side.

In the present embodiment, it is possible to individually set the heating unit 313 on the side of the first injection unit 301 and the heating unit 313 on the side of the second injection unit 302 to start the temperature raising. That is, in some cases, a target temperature to be achieved by the temperature raising may vary depending on a material difference between a molding material supplied to the cylinder 310 of the first injection unit 301 (hereinafter, referred to as a first molding material) and a molding material supplied to the cylinder 310 of the second injection unit 302 (hereinafter, referred to as a second molding material) . When the temperature raising starts at the same time in this case, even though one molding material reaches the target temperature, the other molding material may not reach the target temperature. In this case, when one molding material is continuously retained in a state where the temperature of one molding material reaches the target temperature while the temperature of the other molding material reaches the target temperature, there is a possibility that a molding defect such as discoloration may occur. Therefore, in the present embodiment, it is possible to set the conditions for individually start the temperature raising in the heating unit 313 on the first injection unit 301 side and the heating unit 313 on the second injection unit 302 side.

The acquisition unit 713 acquires various signals from each configuration of the injection molding machine 10. For example, the acquisition unit 713 acquires a temperature signal indicating the temperature of the mold unit 800 from the temperature measurer 610. Furthermore, the acquisition unit 713 acquires a temperature signal indicating the temperature of the cylinder 310 from the temperature measurer 314, for each of the first injection unit 301 and the second injection unit 302.

The mold temperature control unit 714 controls the temperature raising of the mold unit 800, based on the temperature signal indicating the temperature of the mold unit 800 which is acquired by the acquisition unit. In the present embodiment, the mold temperature control unit 714 controls the temperature raising of the mold unit 800 by outputting a control signal to the mold temperature controller 600. The mold temperature control unit 714 of the present embodiment controls the temperature raising of the mold unit 800 until the temperature of the mold unit 800 reaches the target temperature preset for the mold unit 800. The target temperature preset for the mold unit 800 is determined in accordance with the embodiment of the material of the molding material, and thus, description thereof will be omitted. In addition, in the present embodiment, the condition for starting the temperature raising of the mold unit 800 may be any desired condition such as worker's control or a timer as long as the molding can be performed at a work start time, and thus, description thereof will be omitted.

The cylinder temperature control unit 715 controls the temperature raising of the cylinder 310 provided in each of the first injection unit 301 and the second injection unit 302 by using the heating unit 313, based on the temperature signal of the cylinder 310 which is acquired by the acquisition unit 713 and the calendar timer setting information.

When the condition indicated by the calendar timer setting information is satisfied, the cylinder temperature control unit 715 starts the temperature raising of the cylinder 310 by using the heating unit 313 on the injection unit side associated with the satisfied condition.

Then, after the temperature raising starts, the cylinder temperature control unit 715 controls the temperature raising of the cylinder 310, based on the temperature of the cylinder 310, until the temperature of the cylinder 310 reaches the target temperature corresponding to the molding material supplied to the cylinder 310. In the present embodiment, the cylinder temperature control unit 715 controls the temperature raising of the cylinder 310 by outputting a control signal to the heating unit 313 corresponding to the cylinder 310 which is a temperature raising target. The target temperature of the present embodiment is set to a different value depending not only on the difference in the molding materials but also on whether a purpose of starting the temperature raising is the heat retention or the molding. The target temperature for heat retention is lower than the target temperature for molding. Moreover, the target temperature for the heat retention is higher than a room temperature.

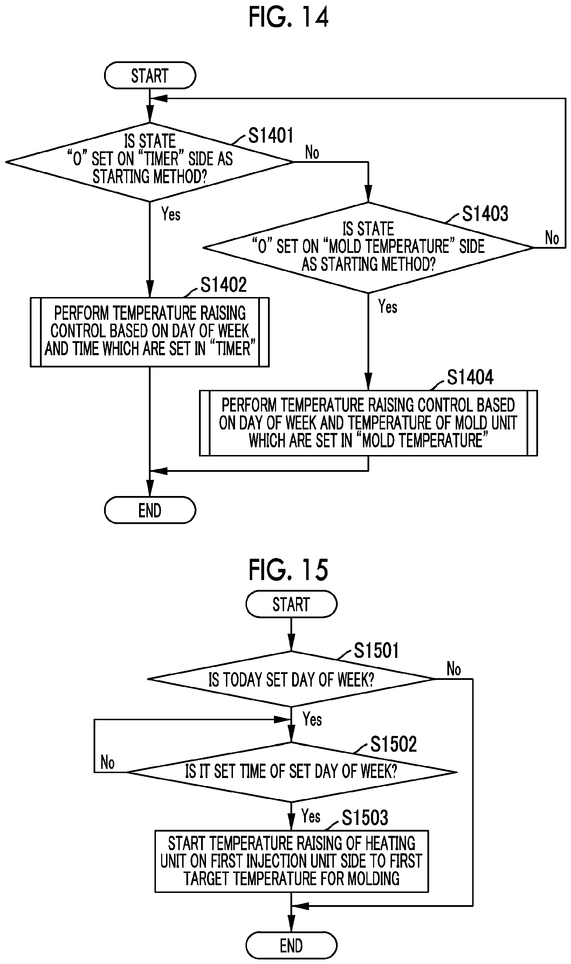

Next, the temperature raising control of the cylinder 310 of the injection molding machine 10 will be described. FIG. 14 is a flowchart illustrating an overall flow of the temperature raising control of the cylinder 310 in the injection molding machine 10 of the present embodiment.

As illustrated in FIG. 14, the cylinder temperature control unit 715 reads the calendar timer setting information, and determines whether or not "o" is set in a "state" on the "timer" side of the starting method for each of the "heating unit (heat retention) on the first injection unit side", the "heating unit (molding) on the first injection unit side", the "heating unit (heat retention) on the second injection unit side", and the "heating unit (molding) on the second injection unit side" (S1401). In this way, in an example illustrated in FIG. 14, it is determined that "o" is set in the "state" of any starting method.

When the cylinder temperature control unit 715 determines that "o" is set in the "state" on the "timer" side (S1401: Yes), the cylinder temperature control unit 715 performs the temperature raising control based on the day of the week and the time which are set in the "timer" (S1402).

On the other hand, when the cylinder temperature control unit 715 determines that "o" is not set in the "state" on the "timer" side (S1401: No), the cylinder temperature control unit 715 determines whether or not "o" is set in the "state" on the "mold temperature" side of the starting method in each of the "heating unit (heat retention) on the first injection unit side", the "heating unit (molding) on the first injection unit side", the "heating unit (heat retention) on the second injection unit side", and the "heating unit (molding) on the second injection unit side" (S1403).

When the cylinder temperature control unit 715 determines that "o" is set in the "state" on the "mold temperature" side (S1403: Yes), the cylinder temperature control unit 715 performs the temperature raising control based on the day of the week and the temperature of the mold unit 800 which are set in the "mold temperature" (S1404). On the other hand, when the cylinder temperature control unit 715 determines that "o" is not set in the "state" on the "mold temperature" side (S1403: No), the process is performed again from S1401.

Next, the temperature raising control based on the day of the week and the time which are set in the "timer" illustrated in S1402 will be described. FIG. 15 is a flowchart of the temperature raising control based on a set time in the cylinder temperature control unit 715 of the present embodiment. In an example illustrated in FIG. 15, the process for the "heating unit (molding) on the first injection unit side" will be described as an example. Furthermore, in the example illustrated in FIG. 15, only the "timer" is set, and the "mold temperature" is not set.

First, the cylinder temperature control unit 715 determines whether or not today is the set day of the week in the "heating unit (molding) on the first injection unit side" (S1501). When it is determined that today is not the set day of the week (S1501: No), the process ends.

When the cylinder temperature control unit 715 determines that today is the set day of the week (S1501: Yes), the cylinder temperature control unit 715 determines whether or not it is a set time of the set day of the week of the "heating unit (molding) on the first injection unit side" (S1502).

When the cylinder temperature control unit 715 determines that it is not the set time of the set day of the week of the "heating unit (molding) on the first injection unit side" (S1502: No), the process in S1502 is repeated again after a predetermined time elapses.

On the other hand, when the cylinder temperature control unit 715 determines that it is the set time of the set day of the week of the "heating unit (molding) on the first injection unit side" (S1502: Yes), the cylinder temperature control unit 715 starts the temperature raising of the heating unit 313 on the first injection unit side to a first target temperature for molding (S1503). The first target temperature for molding is a preset target temperature, as a temperature suitable for molding a first molding material supplied to the cylinder 310 on the first injection unit 301 side.

In the example illustrated in FIG. 15, a case of the "heating unit (molding) on the first injection unit side" has been described. However, the same process is performed on the "heating unit (heat retention) on the first injection unit side ", the "heating unit (molding) on the second injection unit side", and the "heating unit (heat retention) on the second injection unit side". Thus, specific description thereof will be omitted.

In this manner, in the temperature raising of the "heating unit (heat retention) on the first injection unit side", when "o" is set in the "state" of the "heating unit (heat retention) on the first injection unit side" and it is the set time of the set day of the week, the cylinder temperature control unit 715 starts the temperature raising to the first target temperature for heat retention in the heating unit 313 on the first injection unit side. The first target temperature for heat retention is a preset target temperature, as a temperature suitable for heat retention of the first molding material supplied to the cylinder 310 on the first injection unit 301 side.

The target temperature for heat retention is a temperature at which discoloration does not occur due to the molding material even when the molding material is maintained at the temperature. As the target temperature for heat retention, it is conceivable to use a value obtained by subtracting 100°C from the temperature required for molding, and for example, it is conceivable to use 150°C or 180°C. When the temperature for heat retention is raised, the temperature can reach the temperature required for molding earlier than the room temperature. Accordingly, improved work efficiency can be realized.

Furthermore, in the temperature raising of the "heating unit (molding) on the second injection unit side", when "o" is set in the "state" of the "heating unit (molding) on the second injection unit side" and it is the set time of the set day of the week, the cylinder temperature control unit 715 starts the temperature raising to a second target temperature for molding in the heating unit 313 on the second injection unit side. The second target temperature for molding is a preset target temperature, as a temperature suitable for molding the second molding material supplied to the cylinder 310 on the second injection unit 302 side.

Furthermore, in the temperature raising of the "heating unit (heat retention) on the second injection unit side", when "o" is set in the "state" of the "heating unit (heat retention) on the second injection unit side" and it is the set time of the set day of the week, the cylinder temperature control unit 715 starts the temperature raising to the second target temperature for heat retention in the heating unit 313 on the second injection unit side. The second target temperature for heat retention is a preset target temperature, as a temperature suitable for heat retention of the second molding material supplied to the cylinder 310 on the second injection unit 302 side.

Next, a case of using the calendar timer setting information illustrated in FIG. 13 will be described as a flow of a specific process. In the calendar timer setting information illustrated in FIG. 13, the time is set to "Monday" of the "timer" for each of the "heating unit (molding) on the first injection unit side" and the "heating unit (molding) on the second injection unit side". Therefore, every Monday, after the mold temperature control unit 714 starts the temperature raising control of the mold unit 800, when the current time is "7:40" (example of a first time), the cylinder temperature control unit 715 determines that it is the set day of the week of the "heating unit (molding) on the first injection unit side" (S1501: Yes), and determines that it is the set time of the set day of the week (S1502: Yes) . In S1503, the cylinder temperature control unit 715 start the temperature raising of the heating unit 313 on the first injection unit side to the first target temperature for molding. In the following description, the processes are performed in accordance with a process procedure the same as that in FIG. 15.

Thereafter, when the current time is "7:50" (example of a second time), the cylinder temperature control unit 715 determines that it is the set day of the week of the "heating unit (molding) on the second injection unit side", and determines that it is the set time of the set day of the week. The cylinder temperature control unit 715 starts the temperature raising of the heating unit 313 on the second injection unit side to the second target temperature for molding.

In the present embodiment, as described above, the time for starting the temperature raising can be changed for each of the injection units . In this manner, it is possible to prevent a molding defect such as discoloration caused by the retention of the molding material.

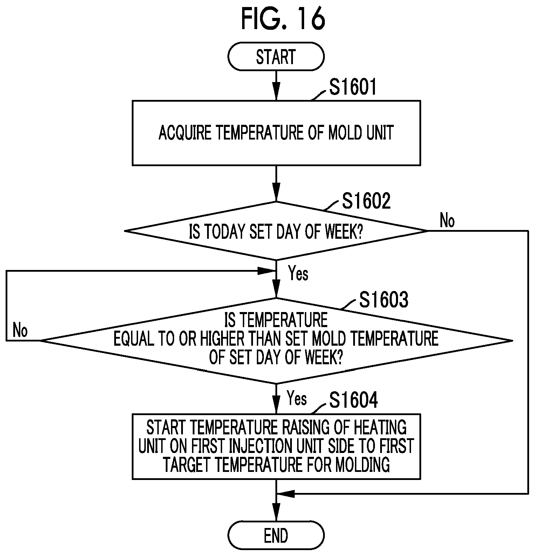

Next, the temperature raising control based on the temperature measured from the mold unit 800 illustrated in S1404 will be described. FIG. 16 is a flowchart of the temperature raising control based on the measured temperature of the mold unit 800 in the cylinder temperature control unit 715 of the present embodiment. In an example illustrated in FIG. 16, only the "mold temperature" is set, and the "timer" is not set.

First, the acquisition unit 713 acquires the temperature of the mold unit 800 from the temperature measurer 314 (S1601).

On the other hand, the cylinder temperature control unit 715 determines whether or not today is the set day of the week in the "heating unit (molding) on the first injection unit side" (S1602). When it is determined that it is not the set day of the week (S1602: No), the process ends.

When the cylinder temperature control unit 715 determines that it is the set day of the week (S1602: Yes), the cylinder temperature control unit 715 determines whether or not the temperature is equal to or higher than the set mold temperature of the set day of the week (S1603).

When the cylinder temperature control unit 715 determines that the temperature is not equal to or higher than the mold temperature set on the day of the week of today of the "heating unit (molding) on the first injection unit side" (S1603: No), the process in S1603 is repeated again after a predetermined time elapses.

On the other hand, when the cylinder temperature control unit 715 determines that the temperature of the mold unit 800 is equal to or higher than the mold temperature set on today's day of "heating unit (molding) on the first injection unit side" (S1603: Yes), the cylinder temperature control unit 715 starts the temperature raising of the heating unit 313 on the first injection unit side to the first target temperature for molding (S1604).

In the example illustrated in FIG. 16, a case of the "heating unit (molding) on the first injection unit side" has been described. However, the same process is performed on the "heating unit (heat retention) on the first injection unit side ", the "heating unit (molding) on the second injection unit side", and the "heating unit (heat retention) on the second injection unit side". Thus, specific description thereof will be omitted.

In this manner, in the temperature raising of the "heating unit (heat retention) on the first injection unit side", when "o" is set in the "state" of the "heating unit (heat retention) on the first injection unit side" and the temperature of the mold unit 800 is equal to or higher than the set mold temperature of the set day of the week, the cylinder temperature control unit 715 starts the temperature raising of the heating unit 313 on the first injection unit side to the first target temperature for heat retention.

Furthermore, in the temperature raising of the "heating unit (molding) on the second injection unit side", when "o" is set in the "state" of the "heating unit (molding) on the second injection unit side" and the temperature of the mold unit 800 is equal to or higher than the set mold temperature of the set day of the week, the cylinder temperature control unit 715 starts the temperature raising of the heating unit 313 on the second injection unit side to the second target temperature for molding.

Furthermore, in the temperature raising of the "heating unit (heat retention) on the second injection unit side", when "o" is set in the "state" of the "heating unit (heat retention) on the second injection unit side" and the temperature of the mold unit 800 is equal to or higher than the set mold temperature of the set day of the week, the cylinder temperature control unit 715 starts the temperature raising of the heating unit 313 on the second injection unit side to the second target temperature for heat retention.

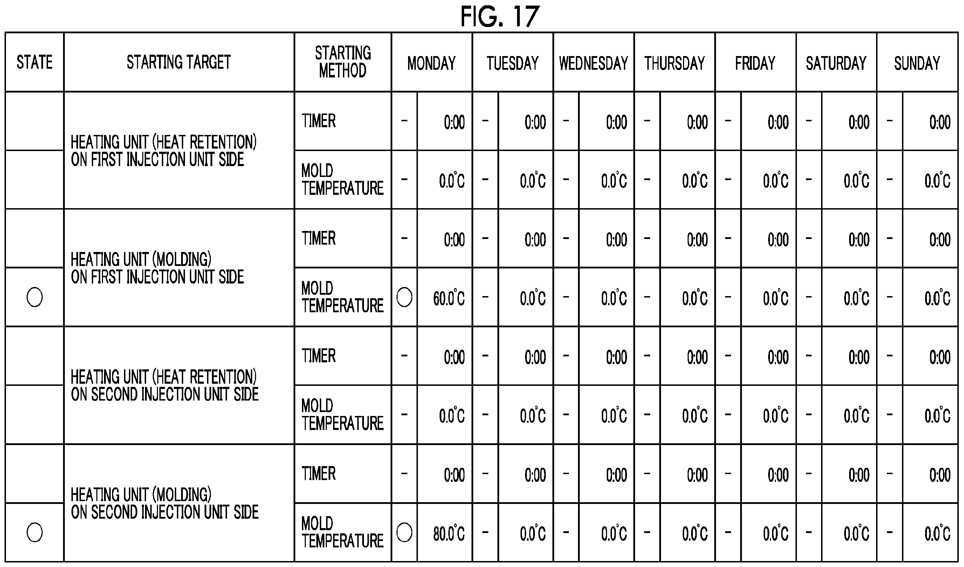

Next, a second example of the calendar timer setting information will be described. FIG. 17 is a view illustrating the second example of the calendar timer setting information 721. The example of the calendar timer setting information 721 illustrated in FIG. 17 is a case of setting the mold temperature for starting the temperature raising to the molding temperature. In the "heating unit (molding) on the first injection unit side" and the "heating unit (molding)" on the second injection unit side, the "starting method" is a record of the "mold temperature", and the mold temperature is set in a field of "Monday".

Therefore, every Monday, when the temperature of the mold unit 800 reaches "60.0°C", the cylinder temperature control unit 715 determines that the temperature reaches the set mold temperature of the set day of the week in the "heating unit (molding) on the first injection unit side", and starts the temperature raising of the heating unit 313 on the first injection unit side to the first target temperature for molding.

In addition, when the temperature of the mold unit 800 reaches "80.0°C", the cylinder temperature control unit 715 determines that the temperature reaches the set mold temperature of the set day of the week in the "heating unit (molding) on the second injection unit side", and starts the temperature raising of the heating unit 313 on the second injection unit side to the second target temperature for molding.

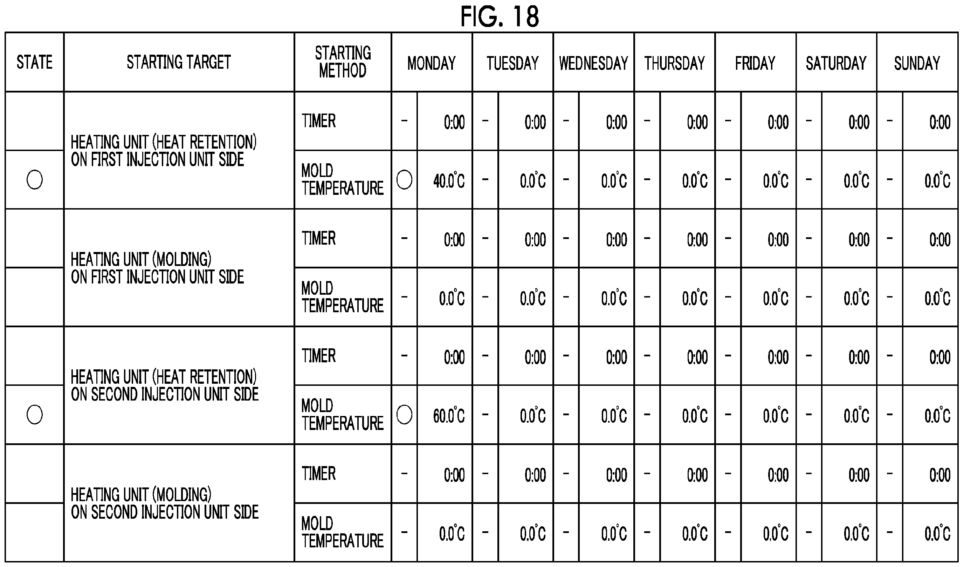

Next, a third example of the calendar timer setting information will be described. FIG. 18 is a view illustrating the third example of the calendar timer setting information 721. The example of the calendar timer setting information 721 illustrated in FIG. 18 is a case of setting the mold temperature for starting the temperature raising to the heat retention temperature. In the "heating unit (heat retention) on the first injection unit side" and the "heating unit (heat retention)" on the second injection unit side, the "starting method" is a record of the "mold temperature", and the mold temperature is set in the field of "Monday".

Therefore, every Monday, when the temperature of the mold unit 800 reaches "40.0°C", the cylinder temperature control unit 715 determines that the temperature reaches the set mold temperature of the set day of the week in the "heating unit (heat retention) on the first injection unit side", and starts the temperature raising of the heating unit 313 on the first injection unit side to the first target temperature for heat retention.

In addition, when the temperature of the mold unit 800 reaches "60.0°C", the cylinder temperature control unit 715 determines that the temperature reaches the set mold temperature of the set day of the week in the "heating unit (heat retention) on the second injection unit side", and starts the temperature raising of the heating unit 313 on the second injection unit side to the second target temperature for heat retention.

In the present embodiment, as described above, the timing for starting the temperature raising can be changed for each of the injection units . In this manner, it is possible to prevent a molding defect such as discoloration caused by the retention of the molding material. Furthermore, the temperature raising of the cylinder 310 starts by determining that the temperature of the mold unit 800 reaches a predetermined set temperature as a trigger point. In this manner, the temperature raising of the cylinder 310 is completed earlier than that of the mold unit 800, and it is possible to suppress a molding defect such as discoloration caused by the retention of the molding material inside the cylinder 310.

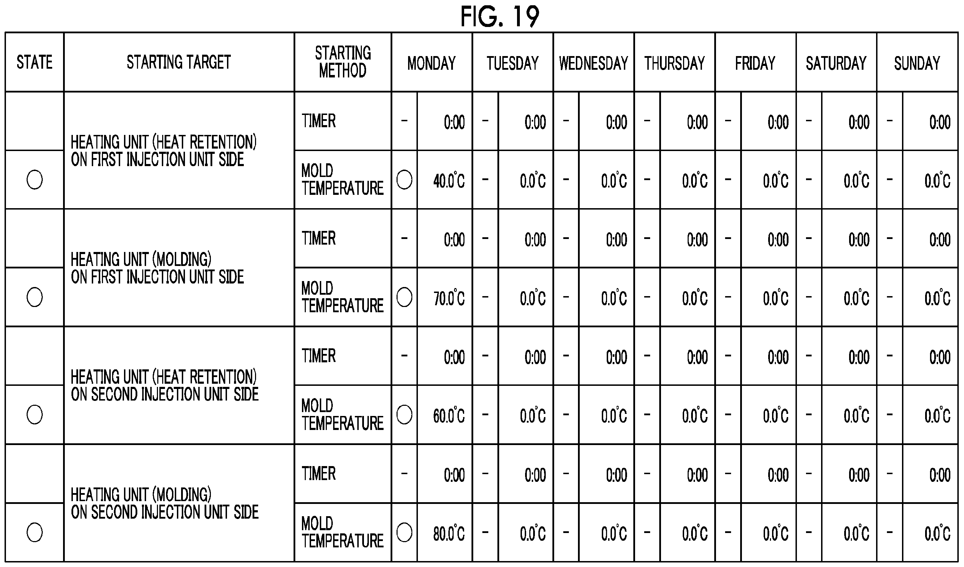

Next, a fourth example of the calendar timer setting information will be described. FIG. 19 is a view illustrating the fourth example of the calendar timer setting information 721. The example of the calendar timer setting information 721 illustrated in FIG. 19 is a case of setting the mold temperature for multi-stage control. In the "heating unit (molding) on the first injection unit side", the "heating unit (heat retention) on the first injection unit side", the "heating unit (molding) on the second injection unit side", and the "heating unit (heat retention) on the second injection unit side", the "starting method" is a record of the "mold temperature", and the mold temperature is set in the field of "Monday". As illustrated in FIG. 19, different temperatures are set for the heat retention and the molding.

In this way, in the calendar timer setting information, in some cases, the mold temperature or the time for starting the temperature raising of one injection unit may be set for each of the molding and the heat retention. In this case, in some situations, the mold temperature or the time set for starting the temperature raising for the molding is satisfied while the temperature raising aiming at the target temperature for heat retention is performed. In the present embodiment, in a case of this situation, the control of the temperature raising to the target temperature for heat retention ends, and the control of the temperature raising to the target temperature for molding starts. Next, a flow of a specific process will be described.

Every Monday, when the temperature of the mold unit 800 reaches "40.0°C", the cylinder temperature control unit 715 determines that the temperature reaches the set mold temperature of the set day of the week in the "heating unit (heat retention) on the first injection unit side", and starts the temperature raising of the heating unit 313 on the first injection unit side to the first target temperature for heat retention.

Thereafter, when the temperature of the mold unit 800 reaches "60.0°C", the cylinder temperature control unit 715 determines that the temperature reaches the set mold temperature of the set day of the week in the "heating unit (heat retention) on the second injection unit side", and starts the temperature raising of the heating unit 313 on the second injection unit side to the second target temperature for heat retention.

Thereafter, when the temperature of the mold unit 800 reaches "70.0°C", the cylinder temperature control unit 715 determines that the temperature reaches the set mold temperature of the set day of the week in the "heating unit (molding) on the first injection unit side". When the cylinder temperature control unit 715 raises the temperature of the heating unit 313 on the first injection unit side to the first target temperature for heat retention, the temperature raising process ends. Then, the cylinder temperature control unit 715 starts the temperature raising to the first target temperature for molding in the heating unit 313 on the first injection unit side.

Thereafter, when the temperature of the mold unit 800 reaches "80.0°C", the cylinder temperature control unit 715 determines that the temperature reaches the set mold temperature of the set day of the week in the "heating unit (molding) on the second injection unit side". When the cylinder temperature control unit 715 raises the temperature of the heating unit 313 on the second injection unit side to the second target temperature for heat retention, the process for the temperature raising ends. Then, the cylinder temperature control unit 715 starts the temperature raising to the second target temperature for molding in the heating unit 313 on the second injection unit side.

In this way, when the temperature of the mold unit 800 reaches "40.0°C" or "60.0°C" (example of a first set temperature), the cylinder temperature control unit 715 starts the temperature raising control of the cylinder 310 to the first target temperature for heat retention or the second target temperature for heat retention. Then, when the temperature of the mold unit 800 reaches "70.0°C" or "80.0°C" (example of a second set temperature), the cylinder temperature control unit 715 ends the temperature raising control aiming at the first target temperature for heat retention or the second target temperature for heat retention. Then, the cylinder temperature control unit 715 starts the temperature raising control of the cylinder 310 to the first target temperature for molding or the second target temperature for molding, which corresponds to "70.0°C" or "80.0°C".

In the present embodiment, as described above, when the temperature of the mold unit 800 is further raised after the temperature of the cylinder 310 on the injection molding machine side is raised to the target temperature for heat retention, based on the temperature of the mold unit 800, multi-stage control for the temperature raising is performed so that the temperature of the cylinder 310 on the injection molding machine side reaches the target temperature for molding. In this way, the temperature raising of the cylinder 310 on the injection molding machine side may be performed in multiple stages in accordance with the temperature of the mold unit 800.

In the present embodiment, in a case where the mold temperature for starting the temperature raising is set for each of the molding and the heat retention for one injection unit, in some situations, when the mold temperature set for starting the temperature raising for molding is satisfied while the temperature raising aiming at the target temperature for heat retention is performed, the temperature raising control to the target temperature for heat retention ends, and the temperature raising control to the target temperature for molding starts. However, the present embodiment is not limited to this control. For example, in some situations, even when the mold temperature or the time set for starting the temperature raising for molding is satisfied while the temperature raising aiming at the target temperature for heat retention is performed, the temperature raising for heat retention may be continued. After the temperature raising aiming at the target temperature for heat retention may end, the temperature raising for molding may start.

In the present embodiment, the multi-stage temperature raising control of the cylinder 310 on the injection molding machine side is not limited to an example in which the control corresponds to the temperature of the mold unit 800, and other methods may be used.

In the injection molding machine 10 of the present embodiment, as described above, the temperature raising control of the cylinder 310 is performed, based on the temperature of the mold unit 800. In this manner, the temperature raising of the mold unit 800 and the temperature raising of the cylinder 310 are performed in parallel. Accordingly, it is possible to shorten a time required until the work can start. Furthermore, even when a time required for raising the temperature of the mold unit 800 is longer than that in the cylinder 310, the temperature raising of the cylinder 310 starts after the temperature of the mold unit 800 is raised to a predetermined set temperature. Therefore, it is possible to reduce a retention time of the molding material supplied to the cylinder 310 until the temperature raising of the mold unit 800 ends after the temperature raising of the cylinder 310 ends. In this manner, it is possible to prevent a molding defect such as discoloration of the molding material inside the cylinder 310. Furthermore, in the related art, when the molding material is a resin, the molding material may be carbonized by being retained inside the cylinder 310 for a long time, thereby causing a possibility that the molding material may adhere to the screw 330. On the other hand, in the injection molding machine 10 of the present embodiment, the retention time after the temperature raising to a molding-available temperature ends can be reduced. Therefore, it is possible to suppress a possibility that the carbonized molding material may adhere to the screw 330.

Furthermore, in the injection molding machine 10 of the present embodiment, the timing for starting the temperature raising of the cylinder 310 is changed for each of the injection units by the above-described process. In this manner, when a different molding material is supplied for each of the injection units, even when the target temperature to be achieved by the temperature raising varies depending on each molding material, while the temperature raising of one molding material is performed, the temperature rising of the other molding material ends. Therefore, it is possible to suppress a molding defect such as discoloration caused by the retention of the other molding material and decomposition caused by a long-term exposure to a high temperature.

### (Modification Example)

Hitherto, the embodiments of the injection molding machine have been described. However, the present invention is not limited to the above-described embodiments. Various modifications, corrections, substitutions, additions, deletions, and combinations can be made within the scope of the appended claims. As a matter of course, all of these also belong to the technical scope of the present invention.

In the above-described embodiment, a case has been described where the temperature raising of the cylinder 310 of the first injection unit 301 and the temperature raising of the cylinder 310 of the second injection unit 302 are individually performed. However, the above-described embodiment is not limited to the case where the temperature raising of the cylinder 310 is individually performed. Therefore, as a modification example, a case will be described where the temperature raising is performed at the same time when a plurality of the cylinders are provided.

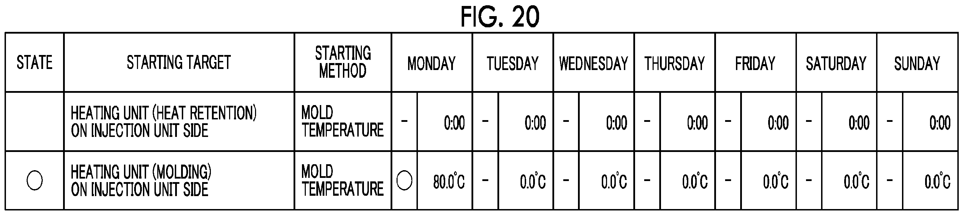

FIG. 20 is a view illustrating a fifth example of the calendar timer setting information 721. In the example of the calendar timer setting information 721 illustrated in FIG. 20, based on the "mold temperature", the temperature raising control can be performed on each of the "heating unit (molding) on the injection unit side" and the "heating unit (heat retention) on the injection unit side".

The cylinder temperature control unit 715 starts the temperature raising control of the cylinder 310 of the first injection unit 301 and the second injection unit 302, based on the conditions set in the calendar timer setting information 721. In the example illustrated in FIG. 20, every Monday, when the temperature of the mold unit 800 reaches "80.0°C", the cylinder temperature control unit 715 determines that the temperature reaches the set mold temperature in the "heating unit (molding) on the injection unit side", and starts the temperature raising control of the heating unit 313 on the first injection unit 301 side and the heating unit 313 on the second injection unit 302 side. In this case, the target temperatures of the heating unit 313 on the first injection unit 301 side and the heating unit 313 on the second injection unit 302 side may coincide with each other, or may be different from each other. In the present modification example, the temperature raising of the mold unit 800 and the temperature raising of the cylinder 310 are performed in parallel. Therefore, a time required until the work can start can be shortened.

In the present embodiment, an example has also been described in which the temperature raising control is performed in two stages. In the present embodiment, the multi-stage control is not limited to the two-stage control, and as a modification example, the control may be performed in three or more stages. For example, it is conceivable to register three or more types (for example, 80°C, 100°C, and 120°C) as the mold temperature in the calendar timer setting information. Then, it is conceivable to adopt the following configurations. When the temperature of the mold unit 800 reaches "80°C", the cylinder temperature control unit 715 raises the temperature of the cylinder 310 on the injection molding machine side to the target temperature of "250°C". When the temperature of the mold unit 800 reaches "100°C", the cylinder temperature control unit 715 raises the temperature of the cylinder 310 on the injection molding machine side to the target temperature of "300°C". When the temperature of the mold unit 800 reaches "120°C", the cylinder temperature control unit 715 raises the temperature of the cylinder 310 on the injection molding machine side to the target temperature of "360°C".

Alternatively, it is conceivable to adopt various embodiments as the modification examples. In the above-described embodiment, the first ejector unit 201 and the second ejector unit 202 are disposed at an interval in the Y-axial direction, and the second molding product 22 elongated in the Y-axial direction is ejected from the movable die 820. However, the present invention is not limited thereto. The first ejector unit 201 and the second ejector unit 202 may be disposed at an interval in the Z-axial direction, and the second molding product 22 elongated in the Z-axial direction may be ejected from the movable die 820.

In the above-described embodiment, the first cavity space 801 and the second cavity space 802 are disposed at an interval in the Z-axial direction. However, the present invention is not limited thereto. The first cavity space 801 and the second cavity space 802 may be disposed at an interval in the Y-axial direction.

In the above-described embodiment, an example has been described in which the mold temperature control unit 714 is provided inside the control device 700 of the injection molding machine 10. However, the present embodiment is not limited to the example in which the control device 700 controls the mold temperature, and other configurations may control the mold temperature. For example, the mold temperature control unit 714 may be provided inside the mold temperature controller 600. In this case, the mold temperature controller 600 acquires the temperature of the mold unit 800, and controls the temperature raising of the mold unit 800, based on the acquired temperature. As in the above-described embodiment, the control device 700 controls the temperature raising of the cylinder 310, based on the temperature of the mold unit 800 which is indicated by the temperature signal acquired by the acquisition unit 713. In this manner, an advantageous effect the same as that of the above-described embodiment can be achieved.

In the above-described embodiment, the stationary die 810 corresponds to the first die described in the appended claims, and the movable die 820 corresponds to the second die described in the appended claims. However, the present invention is not limited thereto. The stationary die 810 may correspond to the second die described in the appended claims, and the movable die 820 may correspond to the first die described in the appended claims.

In the above-described embodiment, the rotary table 190 is used, but the rotary table 190 may not be used. In this case, the second die is attached to the second platen without using the rotary table. When the first ejector unit 201 and the second ejector unit 202 eject the same molding product from the second die, deformation of the molding product can be suppressed, and damage to the molding product can be suppressed.

In the above-described embodiment, the first injection unit 301 and the second injection unit 302 are used, but the number of the injection units may be one. When the first ejector unit 201 and the second ejector unit 202 eject the same molding product from the second die, deformation of the molding product can be suppressed, and damage to the molding product can be suppressed. The number of the injection units may be three or more.

### Brief Description of the Reference Symbols

- 10:: injection molding machine
- 700:: control device
- 702:: storage medium
- 711:: input receiving unit
- 712:: display processing unit
- 713:: acquisition unit
- 714:: mold temperature control unit
- 715:: cylinder temperature control unit

## Claims

1. An injection molding machine (10) comprising:
a plasticizing cylinder (310) connected to a cavity space (801, 802) formed in a mold unit (800) and melting a molding material to mold a molding product in the cavity space (801, 802); and
a control unit (715) configured to control temperature raising of the plasticizing cylinder (310), based on a temperature of the mold unit (800) and a set time.

2. The injection molding machine (10) according to claim 1,
wherein the control unit (715) is configured to control the temperature raising of the plasticizing cylinder (310) when the temperature of the mold unit (800) reaches a set temperature.

3. The injection molding machine (10) according to claim 2,
wherein the control unit (715) is configured to start the temperature raising of the plasticizing cylinder (310) when the temperature of the mold unit (800) reaches a first set temperature.

4. The injection molding machine (10) according to claim 2 or 3,
wherein the control unit (715) is configured to change a target temperature of the plasticizing cylinder (310) when the temperature of the mold unit (800) reaches a second set temperature.

5. The injection molding machine (10) according to any one of claims 1 to 4,
wherein the plasticizing cylinder (310) includes
a first plasticizing cylinder connected to a first cavity space (801) out of a plurality of the cavity spaces (801, 802) formed in the mold unit (800), and
a second plasticizing cylinder connected to a second cavity space (802) out of the plurality of cavity spaces (801, 802) formed in the mold unit (800), and
the control unit (715) is configured to individually control the temperature raising of each of the first plasticizing cylinder and the second plasticizing cylinder, based on the temperature of the mold unit (800) which is measured by a temperature measurer (610).

6. An injection molding machine (10) comprising:
a first plasticizing cylinder connected to a first cavity space (801) out of a plurality of cavity spaces (801, 802) formed in a mold unit (800) and melting a first molding material to mold a molding product in the first cavity space (801);
a second plasticizing cylinder connected to a second cavity space (802) out of the plurality of cavity spaces (801, 802) formed in the mold unit (800) and melting a second molding material to mold a molding product in the second cavity space (802); and
a control unit (715) configured to individually control temperature raising of each of the first plasticizing cylinder and the second plasticizing cylinder, based on a temperature of the mold unit and a set time for each of the first plasticizing cylinder and the second plasticizing cylinder.

7. The injection molding machine (10) according to claim 6,
wherein the control unit (715) is configured to control the temperature raising of the first plasticizing cylinder when a first time comes, and control the temperature raising of the second plasticizing cylinder when a second time comes.

## Patentansprüche

1. Spritzgießmaschine (10), umfassend:
einen Plastifizierzylinder (310), der mit einem in einer Formeinheit (800) ausgebildeten Kavitätsraum (801, 802) verbunden ist und ein Formmaterial schmilzt, um ein Formprodukt in dem Kavitätsraum (801, 802) zu formen; und
eine Steuereinheit (715), die konfiguriert ist, Temperaturerhöhung des Plastifizierzylinders (310) basierend auf einer Temperatur der Formeinheit (800) und einer eingestellten Zeit zu steuern.

2. Spritzgießmaschine (10) nach Anspruch 1,
wobei die Steuereinheit (715) konfiguriert ist, die Temperaturerhöhung des Plastifizierzylinders (310) zu steuern, wenn die Temperatur der Formeinheit (800) eine eingestellte Temperatur erreicht.

3. Spritzgießmaschine (10) nach Anspruch 2,
wobei die Steuereinheit (715) konfiguriert ist, die Temperaturerhöhung des Plastifizierzylinders (310) zu starten, wenn die Temperatur der Formeinheit (800) eine erste eingestellte Temperatur erreicht.

4. Spritzgießmaschine (10) nach Anspruch 2 oder 3,
wobei die Steuereinheit (715) konfiguriert ist, eine Solltemperatur des Plastifizierzylinders (310) zu ändern, wenn die Temperatur der Formeinheit (800) eine zweite eingestellte Temperatur erreicht.

5. Spritzgießmaschine (10) nach einem der Ansprüche 1 bis 4,
wobei der Plastifizierzylinder (310) umfasst:
einen ersten Plastifizierzylinder, der mit einem ersten Kavitätsraum (801) aus mehreren der in der Formeinheit (800) ausgebildeten Kavitätsräumen (801, 802) verbunden ist, und
einen zweiten Plastifizierzylinder, der mit einem zweiten Kavitätsraum (802) aus mehreren der in der Formeinheit (800) ausgebildeten Kavitätsräumen (801, 802) verbunden ist, und
die Steuereinheit (715) konfiguriert ist, die Temperaturerhöhung jedes von dem ersten Plastifizierzylinder und dem zweiten Plastifizierzylinder, basierend auf der Temperatur der Formeinheit (800), die von einem Temperaturmesser (610) gemessen wird, individuell zu steuern.

6. Spritzgießmaschine (10), umfassend:
einen ersten Plastifizierzylinder, der mit einem ersten Kavitätsraum (801) aus mehreren der in der Formeinheit (800) gebildeten Kavitätsräumen (801, 802) verbunden ist und ein erstes Formmaterial schmilzt, um ein Formprodukt in dem ersten Kavitätsraum (801) zu formen;
einen zweiten Plastifizierzylinder, der mit einem zweiten Kavitätsraum (802) aus mehreren der in der Formeinheit (800) gebildeten Kavitätsräumen (801, 802) verbunden ist und ein zweites Formmaterial schmilzt, um ein Formprodukt in dem zweiten Kavitätsraum (802) zu formen; und
eine Steuereinheit (715), die konfiguriert ist, basierend auf einer Temperatur der Formeinheit und einer eingestellten Zeit für jeden des ersten Plastifizierzylinders und des zweiten Plastifizierzylinders Temperaturerhöhung von jedem von dem ersten Plastifizierzylinder und dem zweiten Plastifizierzylinder individuell zu steuern.

7. Spritzgießmaschine (10) nach Anspruch 6,
wobei die Steuereinheit (715) konfiguriert ist, die Temperaturerhöhung des ersten Plastifizierzylinders zu steuern, wenn ein erster Zeitpunkt kommt, und die Temperaturerhöhung des zweiten Plastifizierzylinders zu steuern, wenn ein zweiter Zeitpunkt kommt.

## Revendications

1. Une machine de moulage à injection (10) comprenant :
un cylindre de plastification (310) raccordé à un espace de cavité (801, 802) formé dans une unité de moulage (800) et mélangeant un matériau de moulage pour mouler un produit de moulage dans l'espace de cavité (801, 802) ; et
une unité de commande (715) configurée pour commander la montée en température du cylindre de plastification (310), sur la base d'une température de l'unité de moule (800) et d'un temps de consigne.

2. La machine de moulage à injection (10) selon la revendication 1,
dans laquelle l'unité de commande (715) est configurée pour commander la montée en température du cylindre de plastification (310) lorsque la température de l'unité de moule (800) atteint une température de consigne.

3. La machine de moulage à injection (10) selon la revendication 2,
dans laquelle l'unité de commande (715) est configurée pour démarrer la montée en température du cylindre de plastification (310) lorsque la température de l'unité de moule (800) atteint une première température de consigne.

4. La machine de moulage à injection (10) selon la revendication 2 ou 3,
dans laquelle l'unité de commande (715) est configurée pour modifier une température cible du cylindre de plastification (310) lorsque la température de l'unité de moule (800) atteint une seconde température de consigne.

5. La machine de moulage à injection (10) selon l'une quelconque des revendications 1 à 4,
dans laquelle le cylindre de plastification (310) comprend :
un premier cylindre de plastification raccordé à un premier espace de cavité (801) parmi une pluralité d'espaces de cavité (801, 802) formés dans l'unité de moule (800), et
un second cylindre de plastification raccordé à un second espace de cavité (802) parmi la pluralité d'espaces de cavité (801, 802) formés dans l'unité de moule (800), et
l'unité de commande (715) est configurée pour commander individuellement la montée en température de chacun parmi le premier cylindre de plastification et le second cylindre de plastification, sur la base de la température de l'unité de moule (800) qui est mesurée par un dispositif de mesure de température (610).

6. Une machine de moulage à injection (10) comprenant :
un premier cylindre de plastification raccordé à un premier espace de cavité (801) parmi une pluralité d'espaces de cavité (801, 802) formés dans une unité de moule (800) et mélangeant un premier matériau de moulage pour mouler un produit de moulage dans le premier espace de cavité (801) ;
un second cylindre de plastification raccordé à un second espace de cavité (802) parmi la pluralité d'espaces de cavité (801, 802) formés dans l'unité de moule (800) et mélangeant un second matériau de moulage pour mouler un produit de moulage dans le second espace de cavité (802) ; et
une unité de commande (715) configurée pour commander individuellement la montée en température de chacun parmi le premier cylindre de plastification et le second cylindre de plastification, sur la base de la température de l'unité de moule et d'un temps de consigne pour chacun parmi le premier cylindre de plastification et le second cylindre de plastification.

7. La machine de moulage à injection (10) selon la revendication 6,
dans laquelle l'unité de commande (715) est configurée pour commander la montée en température du premier cylindre de plastification pour la première fois, et commander la montée en température du second cylindre de plastification pour la seconde fois.
